# EUROPEAN PATENT APPLICATION

(11) **EP 1 909 225 A1**
(43) Date of publication of application: **09.04.2008**
(21) Application number: 06747045.0
(22) Date of filing: 31.05.2006
(51) Int. Cl.: G06Q 30/00, G06F 13/00, G06F 21/24, G06Q 10/00

(54) **ELECTRONIC COMMERCE METHOD AND LICENSE REGISTRATION CHECK SERVER USED FOR THE SAME**

(30) Priority: 31.05.2005 JP 2005159697
(71) Applicant: Mediastick, inc., 1500012 Tokyo (JP)
(72) Inventor: KITAGAWA, Yoshiko MEDIASTICK, INC., Tokyo 150-0012 (JP); YOKOKAWA, Kei MEDIASTICK, INC., Tokyo 150-0012 (JP); YAMAKAWA, Denzo MEDIASTICK, INC., Tokyo 150-0012 (JP)
(74) Representative: Grünecker, Kinkeldey, Stockmair & Schwanhäusser Anwaltssozietät
(86) International application number: PCT/JP2006/310891
(87) International publication number: WO 2006/129720

(57) **Abstract**

(a) Step of a portable information processing device (65a) reading an image code by, editing first level personal information stored in the portable information processing device (65a) and information incorporated in the image code, and directly accessing a business server (64a) based on the edited information; and a license registration server (28) then receiving second level personal information of a higher security level than the first level personal information stored in the portable information processing device (64a) and network information of an access destination of the business server (64a); and (b) step of the license registration server (28) determining whether the portable information processing device (65a) is of a registered user; and (c) step of the license registration server (28) determining whether the business server (64a) has a registered license; and (d) step of the license registration check server (28) authorizing processing for the portable information processing device (65a) to transmit the second level personal information to the business server (64a) are included.

## Description

### BACKGROUND OF THE INVENTION

### FIELD OF THE INVENTION

The present invention pertains to technologies using a communications network such as the Internet. It particularly relates to an information processing device such as an electronic organizer, a mobile phone, a portable notebook-sized personal computer, a camera; or a portable television, which is capable of communication of information via this communications network, an electronic commerce method, which is used in various industries that use the device, and a license registration check server, which is used for this electronic commerce method.

### BACKGROUND-ART

In the current IT technology environment, even if supply-side public information is found on noteworthy advertising media in an offline environment, namely while passing a street corner, there are cases that URL information or advertisement information thereof cannot be input due to time restraints. In addition, there are cases when noted or cut out supply-side public information is lost. Furthermore, after returning home, there is a chance of mistakenly inputting from a personal computer keyboard in an online environment (Note that 'online' in this case means an environment allowing transmission and reception of information using an information communications network and a communication device regardless of wired or wireless connection. Meanwhile, 'offline' refers to an environment not allowing the communication device to receive/transmit information directly from/to a stand-alone printing medium or the like independent from the information communications network.)

Particularly, since reading URL information by sight and inputting using a keyboard online is a burden to elderly people having poor eyesight and the like in this country, Japan, which will be an aging society, a system culminating at once actions such as shopping, requesting for information material, and making reservations even without troublesome inputting of user-side personal information in an ubiquitous environment where offline supply-side public information is presented anywhere and everywhere is much expected.

In view of such circumstances, technology of reading an image code such as a two-dimensional code provided by a business using a portable terminal capable of reading an image code (referred to as 'an image code-reading portable terminal' hereafter) via a printing medium or an electronic display unit, editing network information (such as URL) of an access destination obtained through the reading and personal information stored in the image code-reading portable terminal, and performing electronic commerce and the like over the Internet using the image code-reading portable terminal is proposed, and technology using the image code displayed on the printing medium is becoming common.

Paragraphs [0119] to [0024] of Japanese Unexamined Patent Application Publication No. 2003-085387 describe the following process:

When a license registration check server 28 receives electronic commerce information from a first portable information processing device 65a, the license registration check server 28 checks whether the first portable information processing device 65a is a server authorized with a license agreement. When a license agreement is made, the license registration check server 28 connects to a first electronic commerce providing server 64a, and displays on a specified URL screen. When a user purchases merchandise, the license registration check server 28 requests the user to transmit personal information and receives the personal information. The license registration check server 28 transmits the personal information to the first electronic commerce providing server 64a, and then receives payment information from the first electronic commerce providing server 64a. In step S10, the license registration check server 28 transmits the payment information to the first portable information processing device 65a.

### SUMMARY OF THE INVENTION

### (PROBLEM OF THE INVENTION TO BE SOLVED)

However, in the method of the invention described in Japanese Unexamined Patent Application Publication No. 2003-085387, since the license registration check server mediates all data transmission conducted between the first portable information processing device and the first electronic commerce providing server, necessary processing ability of the license registration check server is high. Thus, a new electronic commerce method allowing reduction in burden of processing ability of the license registration check server is much-expected. In view of the above-given problem, an objective of the present invention is to provide an electronic commerce method allowing reduction in burden of processing ability of the license registration check server, and a license registration check server using this electronic commerce method.

### (MEANS FOR SOLVING THE PROBLEM)

In order to reach the aforementioned objective, a first aspect of the present invention is directed to an electronic commerce method for an electronic commerce system encompassing a portable information processing device, a business server conducting electronic commerce through communication of electronic information with the portable information processing device, and a license registration check server having authority to control the electronic commerce, the portable information processing device, the business server and the license registration check server are connected to each other via a communications network. In other words, the electronic commerce method according to the first aspect of the present invention encompasses: (a) after optically reading, by the portable information processing device, an image code incorporating necessary information for the electronic commerce so as to edit first level personal information stored in the portable information processing device with information incorporated in the image code so as to directly access the business server based on the edited information and to communicate information between the portable information processing device and the business server, receiving, by the license registration check server, second level personal information of a higher security level than the first level personal information stored in the portable information processing device and network information of an access destination of the business server; (b) determining, by the license registration check server, whether the portable information processing device is owned by a registered user, after consulting data stored in an individual authorization data storage unit; (c) determining, by a license registration checking means of the license registration check server, whether the business server has a registered license, after consulting data stored in a license registration data storage unit; and (d) authorizing, by the license registration check server, processing for the portable information processing device to transmit the second level personal information to the business server when the portable information processing device is determined to be owned by the registered user and the business server has the registered license.

A second aspect of the present invention is directed to an electronic commerce method for an electronic commerce system encompassing a portable information processing device, an ASP providing server providing application services to the portable information processing device, and a license registration check server having authority to control electronic commerce, the portable information processing device, the ASP providing server and the license registration check server are connected to each other via a communications network. In other words, the electronic commerce method according to the second aspect of the present invention encompasses: (a) after optically reading, by the portable information processing device, an image code incorporating necessary information for the electronic commerce with a business represented by the ASP providing server so as to edit first level personal information stored in the portable information processing device with information incorporated in the image code so as to directly access the ASP providing server based on the edited information and to communicate information between the portable information processing device and the ASP providing server, receiving, by the license registration check server, second level personal information of a higher security level than the first level personal information stored in the portable information processing device and network information of an access destination of the ASP providing server; (b) determining, by the license registration check server, whether the portable information processing device is owned by a registered user, by consulting data stored in an individual authorization data storage unit; (c) determining, by a license registration checking means of the license registration check server, whether the ASP providing server has a registered license, after consulting data stored in a license registration data storage unit; and (d) authorizing, by the license registration check server, processing for the portable information processing device to transmit the second level personal information to the ASP providing server when the portable information processing device is determined to be owned by the registered user and the ASP providing server has the registered license.

A third aspect of the present invention is directed to an electronic commerce method for an electronic commerce system encompassing a portable information processing device, a business server conducting electronic commerce through communication of electronic information with the portable information processing device, and a license registration check server having authority to control the electronic commerce, the portable information processing device, the business server and the license registration check server are connected to each other via a communications network. In other words, the electronic commerce method according to the third aspect of the present invention encompasses: (a) after optically reading, by the portable information processing device, an image code incorporating necessary information for the electronic commerce so as to edit first level personal information stored in the portable information processing device with information incorporated in the image code so as to directly accessing the business servers based on the edited information, receiving, by the business server, a reservation ticket issue request transmitted by the license registration check server; (b) determining, by a license registration checking means of the license registration check server, whether the business server has a registered license, after consulting data stored in a license registration data storage unit; (c) issuing a reservation ticket to the business server when the business server has the registered license; (d) after communicating information using the portable information processing device, the business server, and a link including a parameter for the reservation ticket, receiving, by the license registration check server, second level personal information of a higher security level than the first level personal information stored in the portable information processing device, network information of an access destination of the business server, and information of the reservation ticket; (e) confirming validity of the reservation ticket by a reservation ticket registration checking means of the license registration check server after consulting data stored in a reservation ticket registration data storage unit; (f) determining, by the license registration check server, whether the portable information processing device is owned by a registered user, after consulting data stored in an individual authorization data storage unit; and (g) authorizing, by the license registration check server, processing for the portable information processing device to transmit the second level personal information to the business server when the reservation ticket is valid and the portable information processing device is determined to be a registered user.

A fourth aspect of the present invention is directed to a license registration check server used in an electronic commerce system encompassing a portable information processing device, a business server conducting electronic commerce through communication of electronic information with the portable information processing device, and a license registration check server having authority to control the electronic commerce, the portable information processing device, the business server and the license registration check server are connected to each other via a communications network. In other words, the license registration check server according to the fourth aspect of the present invention encompasses: (a) an input unit of the license registration check server configured to receive second level personal information of a higher security level than first level personal information stored in the portable information processing device and network information of an access destination of the business server, after the portable information processing device optically reads an image code incorporating necessary information for the electronic commerce so as to edit the first level personal information stored in the portable information processing device and information incorporated in the image code so as to directly access the business server based on the edited information, and to communicate information between the portable information processing device and the business server; (b) an individual authorization data storage unit configured to store individual authorization data; (c) an individual authentication means configured to consult data stored in the individual authorization data storage unit so as to determine whether the portable information processing device is owned by a registered user; (d) a license registration data storage unit configured to store license registration data; (e) a license registration checking means configured to consult data stored in the license registration data storage unit so as to determine whether the business server has a registered license; and (f) a personal data extracting means configured to convert the second level personal information to a format transmittable by the portable information processing device to the business server so as to transmit the second level personal information to the portable information processing device when the portable information processing device is determined to be owned by the registered user and the business server has the registered license.

### (EFFECTIVENESS OF THE INVENTION)

According to the present invention, an electronic commerce method allowing reduction in burden of processing ability of a license registration check server, and a license registration check server using this electronic commerce method may be provided.

### BRIEF DESCRIPTION OF THE DRAWINGS

FIG. 1 is a diagram showing a configuration of an electronic commerce system according to a first embodiment of the present invention;
FIG. 2 is a block diagram showing a configuration of a license registration check server used for the electronic commerce system according to the first embodiment of the present invention;
FIG. 3 is a block diagram showing a configuration of a portable information terminal device;
FIG. 4 is a flowchart (1 of 2) describing an electronic commerce method according to the first embodiment of the present invention;
FIG. 5 is a flowchart (2 of 2) describing the electronic commerce method according to the first embodiment of the present invention;
FIG. 6 is a diagram showing a configuration of an electronic commerce system according to a second embodiment of the present invention;
FIG. 7 is a block diagram showing a configuration of an ASP server used in the electronic commerce system according to the second embodiment of the present invention;
FIG. 8 is a flowchart (1 of 2) describing an electronic commerce method according to the second embodiment of the present invention;
FIG. 9 is a flowchart (2 of 2) describing the electronic commerce method according to the second embodiment of the present invention;
FIG. 10 is a block diagram showing a configuration of a license registration check server used for an electronic commerce system according to a third embodiment of the present invention;
FIG. 11 is a flowchart (1 of 2) describing an electronic commerce method according to the third embodiment of the present invention;
FIG. 12 is a flowchart (2 of 2) describing the electronic commerce method according to the third embodiment of the present invention; and
FIG. 13 is a view showing an example of reading an image code displayed on a baseball homerun scene broadcasted on television, thereby automatically acquiring metadata of interests and tastes of the user who performed the reading, and automatically registering this in a user-side personal information database.

### DETAILED DESCRIPTION OF THE INVENTION

Embodiments of the present invention will be described forthwith while referring to the appended drawings. The first through third embodiments given below exemplify devices and methods to embody the technical ideas of the present invention, which are not to be limited to image codes, electronic display devices; and portable information processing devices capable of reading image codes used in descriptions thereof. The technical ideas of the present invention are able to be modified within the technical scope of the appended claims.

Particularly, while a two-dimensional code is given as an exemplary image code in the following descriptions of electronic commerce methods according to the following embodiments of the present invention, the image code is not necessarily limited to a two-dimensional code, and various image codes, such as a graphic symbol, a one-dimensional code, and a combination of a one-dimensional code and a two-dimensional code, are available. A barcode (one-dimensional code) may be an intermediate code of the one-dimensional code and the two-dimensional code such as a two-dimensionally stacked barcode.

### (FIRST EMBODIMENT)

### - ELECTRONIC COMMERCE SYSTEM -

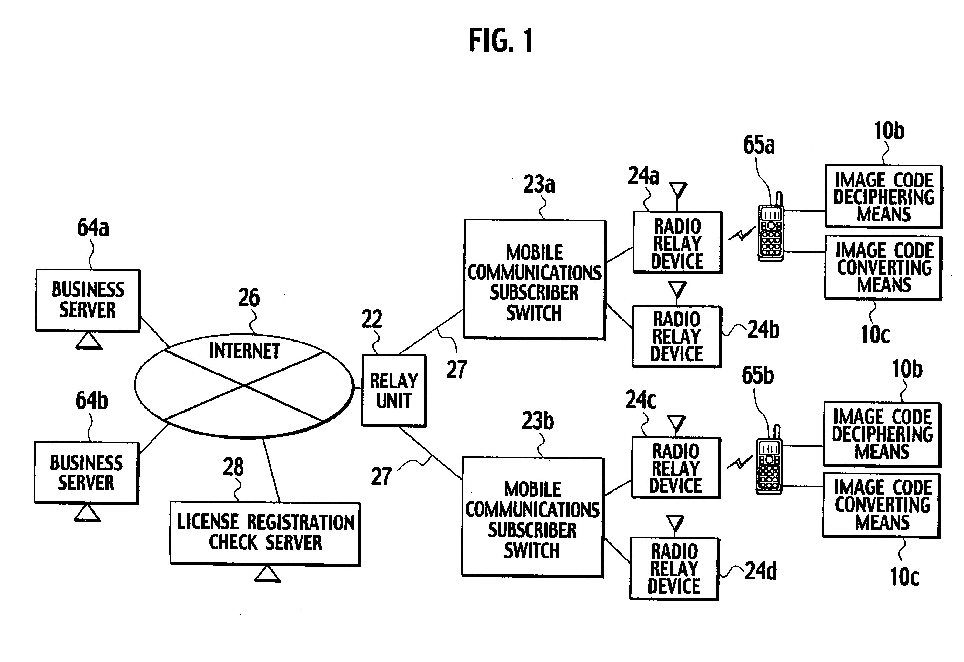

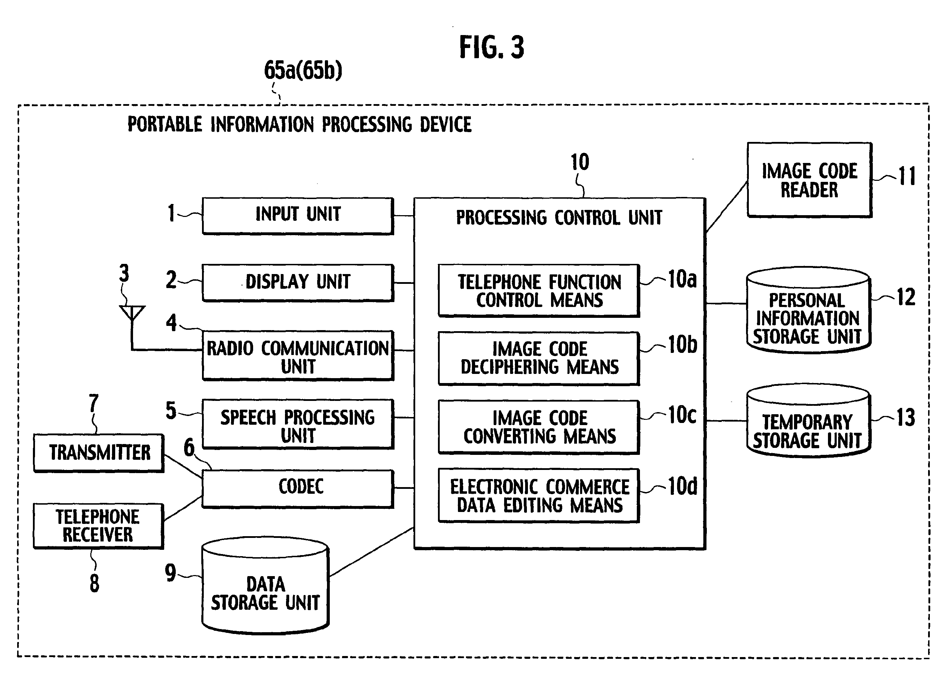

As shown in FIG. 1, an electronic commerce system according to the first embodiment of the present invention includes the Internet (communications network) 26, a first business server 64a, a second business server 64b, ... connected to the Internet 26, a license registration check server 28, and a relay unit 22. The first business server 64a, the second business server 64b, ... may include different types of business servers conducting different services from each other. The electronic commerce system according to the first embodiment of the present invention further includes multiple (numerous) portable information processing devices 65a, 65b, ..., and the portable information processing devices 65a, 65b, ... are connected to the Internet 26 via a digital communications network 27. In other words, while in the electronic commerce system according to the first embodiment, the multiple (numerous) portable information processing devices 65a, 65b, ... are described as mobile-phone units, the portable information processing devices 65a, 65b, ... are not limited thereto, and may be PHSs, PDAs, notebook-sized personal computers, electronic organizers or the like capable of reading an image. Furthermore, they may be electronic devices such as cameras including digital cameras, game consoles, car navigation systems, scanners, and printers as long as they have functions equivalent to an image code deciphering means 10b and an image code converting means 10c and also a function equivalent to an electronic commerce data editing means 10d shown in FIG. 3. Moreover, a structure such that functions equivalent to the image code deciphering means 10b, the image code converting means 10c, and the electronic commerce data editing means 10d are built in or integrated to part of items that are attachable to the body such as wristwatches, eyeglasses, belts, and shoes is possible.

As was mentioned at the beginning, the case of a two-dimensional code given as an exemplary 'image code' is exemplified in the descriptions of the embodiments according to the present invention given forthwith; however, when an image code other than a two-dimensional code such as a graphic symbol, a one-dimensional code, or a combination of a one-dimensional code and a two-dimensional code is used, the 'image code deciphering means 10b' is capable of deciphering these image codes other than the two-dimensional code, and the 'image code converting means 10c' may convert the deciphered image code other than the two-dimensional code to character data.

Returning to discussing the mobile-telephone unit, the digital communications network 27 is constituted by the relay unit 22, which is directly connected to the Internet 26, mobile communications subscriber switches 23a, 23b, ... connected to the relay unit 22, and radio relay devices 24a, 24b, 24c, 24d, ... connected to the mobile communications subscriber switches 23a, 23b, ..., respectively. The radio relay devices 24a, 24b, 24c, 24d, ... are base stations conducting direct communication with the portable information processing devices via radio waves, and are deployed for respective communication areas (cells) or ranges allowing communication via radio waves. The mobile communications subscriber switches 23a, 23b are capable of controlling the radio relay devices 24a, 24b, 24c, 24d, .... When the portable information processing devices 65a, 65b, ... move and communication areas they belong to change accordingly, the relay unit 22 is called by the radio relay devices 24a, 24b, 24c, 24d, ..., always recognizing locations of the portable information processing devices 65a, 65b, ... As a result, continuous interlinks for all communications may be established. The relay unit 22 not only has a connection to the Internet 26, but also has connections via POIs (points of interface) with other communication businesses such as subscriber telephones.

Although details of the portable information processing devices 65a, 65b, ... are given later, they each include an image code reader 11 having a camera function for photographing image codes, where an image code photographed by the image code reader 11 is deciphered by the image code deciphering means 10b, and the image code deciphered by the image code deciphering means 10b is then converted to character data by the image code converting means 10c. The portable information processing devices 65a, 65b, ... each further includes the electronic commerce data editing means 10d, which edits and integrates supply-side public information and user-side personal information included in the image code photographed by the image code reader 11 to metadata in formats specified by the respective multiple business servers 64a, 64b, ... of different industries. The portable information processing devices 65a, 65b, ... then conduct electronic commerce with the respective multiple business servers 64a, 64b, ... of different industries, or communication of information required for this electronic commerce with the respective multiple business servers 64a, 64b, ....

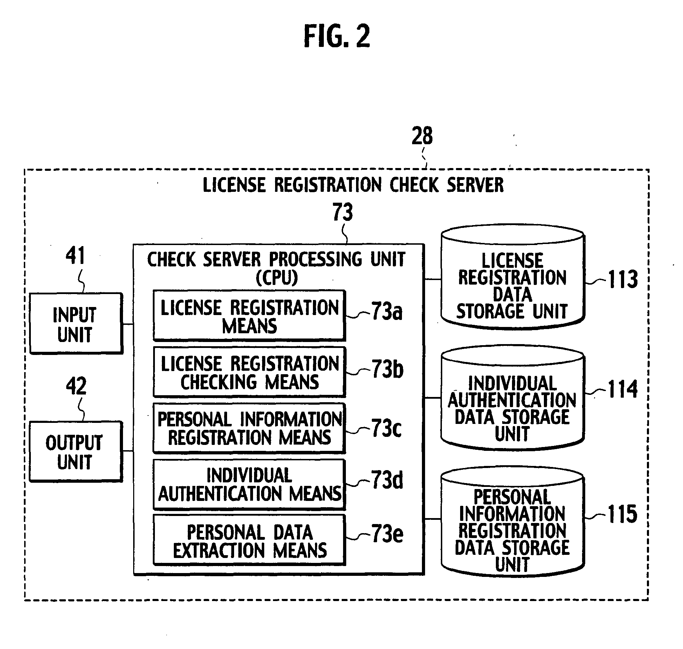

The license registration check server (gateway server) 28 of FIG. 1 includes an input unit 41, an output unit 42, a check server processing unit (CPU) 73, a license registration data storage unit 113, an individual authentication data storage unit 114, and a personal information registration data storage unit 115, as shown in FIG. 2. The input unit 41 is a keyboard, a mouse, a wire/wireless communications medium, or the like, and the output unit 42 is a liquid crystal display, a CRT display, a wire/wireless communications medium, or the like. The check server processing unit (CPU) 73 includes a license registration means 73a and a license registration checking means 73b, and is capable of business license administration. A personal information registration means 73c, an individual authentication means 73d, and a personal data extraction means 73e are provided thereto for management and administration of personal information.

The license registration data storage unit 113 of the license registration check server 28 is a storage unit stored with license registration data. The license registration means 73a of the license registration check server 28 is a logic circuit performing necessary processing for a business attempting to conduct electronic commerce for registering a license required for the electronic commerce according to the first embodiment of the present invention. In other words, the license registration means 73a registers license information for a business capable of the electronic commerce according to the first embodiment in the registration data storage unit 113. The license registration checking means 73b is a logic circuit of referencing the registration data storage unit 113 and judging whether or not the respective multiple business servers 64a, 64b, ... of different industries have a registered license. In other words, the portable information processing devices 65a, 65b, ... may be connected to only business servers having a license registered using the license registration checking means 73b.

The individual authentication data storage unit 114 of the license registration check server 28 is a storage unit stored with individual authentication data. The personal information registration means 73c of the license registration check server 28 is a logic circuit performing necessary processing for possessors of the portable information processing devices 65a, 65b, ... to conduct user registration. The personal information registration means 73c stores the individual authentication data in the individual authentication data storage unit 114, and stores personal information data in the personal information registration data storage unit 115. The individual authentication means 73d is a logic circuit of referencing the individual authentication data storage unit 114 and performing necessary processing for conducting authentication for whether a user is registered when a request for personal information is received from the portable information processing devices 65a, 65b ... attempting to conduct electronic commerce. The personal data extraction means 73e converts personal information, which is requested by the portable information processing devices 65a, 65b, ... to conduct electronic commerce with respective business servers 64a, 64b, ... for multiple businesses including different industries, to a format transmittable to any one of corresponding business servers 64a, 64b, ..., and then transmits it to the portable information processing devices 65a, 65b, .... In other words, the personal data extraction means 73a is a logic circuit of referencing the personal information registration data storage unit 115, converting requested personal information to a format in which the portable information processing devices 65a, 65b, ... can transmit to any one of corresponding business servers 64a, 64b, ... for multiple businesses including different industries, and then transmitting it to the portable information processing devices 65a, 65b, .... This transmission is conducted only when the portable information processing devices 65a, 65b, ... belong to respective registered users, and the subject business servers 64a, 64b, ... have respective registered licenses.

While the exemplary detailed configuration of the portable information processing devices 65a, 65b, ... of FIG. 1 is given in FIG. 3, each is mobile phone with a built-in an image code-reading function including an input unit 1, a display unit 2, a radio communication unit 4, a speech processing unit 5, a CODEC 6, a data storage unit 9, a processing control unit 10, an image code reader 11, a personal information storage unit 12, and a temporary storage unit 13. An antenna 3 is connected to the radio communication unit 4. A telephone transmitter 7 and a telephone receiver 8 are connected to the CODEC 6. The input unit 1 is a push button, scroll button, or the like on the portable information processing devices 65a, 65b, ..., and transmits corresponding key input information (telephone numbers, katakana characters, hiragana characters, kanji characters, alphabetic characters, pictorial symbols, images, etc.) to the processing control unit 10. The display unit 2 displays input information from a pressed key (telephone numbers, katakana characters, hiragana characters, kanji characters, alphabetic characters, pictorial symbols, images, etc.), a selection menu, a selected menu, and the like, and may employ a liquid crystal screen such as a thin film transistor (TFT). The antenna 3 is used for transmitting and receiving radio waves. The speech processing unit 5 may be a digital signal processor (DSP), and may operate as a specialized microprocessor and may take over CPU processing for speech and image processing. The CODEC 6 is used to convert analog speech signals to digital signals, perform the reverse, encode and composite digital speech signals, and store and transmit speech and images. The telephone transmitter 7 inputs speech of the user. The telephone receiver 8 uses a speaker to output speech of a phone call opponent. The data storage unit 9 may be ROM or RAM.

The processing control unit 10 of FIG. 3 is a processor controlling all of the portable information processing devices 65a, 65b, ... according to the first embodiment, and includes logic circuits of a telephone function control means 10a, the image code deciphering means 10b, the image code converting means 10c, and the electronic commerce data editing means 10d. Here, the telephone function control means 10a is a logic circuit performing necessary processing for controlling telephone functions of a standard conventional mobile phone. Speech telephone call control, various setting processing, and functions included in a mobile terminal are carried out using the input unit 1, the telephone transmitter 7, and the telephone receiver 8. The image code deciphering means 10b is a logic circuit performing necessary processing for acquiring data read in by the image code reader 11, and checking whether the read-in image code is valid. The image code converting means 10c is a logic circuit performing necessary processing for converting the two-dimensional data read in by the image code deciphering means to character data. Going through the image code deciphering means 10b and the image code converting means 10c allows conversion of image codes from image data to computer readable data.

The electronic commerce data editing means 10d is a logic circuit performing necessary processing in the metalevel for editing and integrating personal information (user-side personal information) stored in the personal information storage unit 12 and product information obtained by the image code converting means 10c, and the information edited and integrated in a metalevel goes to the outside. Details of processing in a 'metalevel' are given in the specification of US Patent No. 6269365 and specification of US Patent No. 6138116, the contents of which are incorporated in the present specification by reference.

In an open platform, a database system available to the business servers 64a, 64b, ... conducting different services from each other is a 'dissimilar database integrated system' constituted by a three-layered (levels) structure of an 'application level', a 'local level', and a 'metalevel' intervening therebetween, as described in the specification of US Patent No. 6269365. The top layer 'application level' is a layer that the business servers 64a, 64b, ... of arbitrary industries use so as to provide arbitrary services (business transactions) on the open platform, and is a level establishing an application software for use in a multi-database environment. On the open platform, the portable information processing devices 65a, 65b, ... corresponding to the business servers 64a, 64b, ... inquire about necessary information for the respective services (business transactions) via the application software, and obtain results thereof. The application software first describes or converts the necessary information for the respective services (business transactions) on the open platform to a predefined format (referred to as 'script format' hereafter) in a dissimilar database integrated system, issues it to the lower layer metalevel, and acquires the results of the inquiry. An inquiry expressed in script format is simply referred to as 'script' hereafter.

The bottom layer 'local level' is a layer in which exist multiple databases and database management systems (referred to as 'database systems' hereafter) individually corresponding to the respective business servers 64a, 64b, ... of different industries and connected to the multi-database environment. The respective database systems are individually capable of being managed through performing individual operations of inquiry, update, management in a closed environment or closed system corresponding to services for the business servers 64a, 64b, ... of different industries. However, the respective database systems existing in the local level typically have database processing systems unique to those systems, and do not assure uniformity in operation procedures for each database.

The 'metalevel' positioned in the middle layer of the three-layered structure includes a script interpretation unit included in the electronic commerce data editing means 10d, and a metadatabase system constituted by a metadatabase and a metadatabase management system. In the respective database systems existing in the metalevel, the script interpretation unit first interprets an inquiry script received from the application level, and communicates with the database systems existing in the metalevel and the database systems existing in the local level. In other words, the script interpretation unit issues an inquiry to the respective database systems existing in the metalevel and the local level upon conversion to a format (referred to as 'meta-primitive format' hereafter) already defined in the dissimilar database integrated system, and acquires results thereof. In this manner, the application level and the metalevel are interfaced on a script basis, and the metalevel and the local level are interfaced based on an inquiry converted to meta-primitive format, thereby connected to each other.

Therefore, the database systems in the metalevel constituted by the electronic commerce data editing means 10d may absorb a difference in expression format and attribution definition of open platform information among multiple local database systems, provide a group of basic functions, which work for intra-local database integration, and manage data for aiding in the f intra-local database integration. Namely, the database systems in the metalevel may provide a standard expression format for data included in the respective local databases of different industries, which are subjects to be integrated for electronic commerce. Here, the standard expression format is referred to as 'meta format', and data expressed in meta format as 'metadata'.

In other words, the electronic commerce data editing means 10d has a function of editing and integrating the user-side personal information and the supply-side public information in the database systems in the metalevel, and structuring of the three-layer structure of the application level, the metalevel, and the local level. Here, assuming transactions as exemplified in Table 1, the 'supply-side public information' embedded in the image code includes groups of necessary metadata corresponding to the respective types of transactions (actions).

**[Table 1]**

| types of transactions (actions) | | metadata (supply-side public information) | | | | | | remarks |
|---|---|---|---|---|---|---|---|---|
| | | Posting Media | Product Information | Specific URL | Position Information | Phone Number | Email Address | |
| 1 | Access to HP of Specific Product Service | | | O | | | | |
| | | O | O | | | | | |
| 2 | Document Request | | O | O | | | O | |
| | | O | | | | | | |
| 3 | Ordering | | O | O | | | O | for confirmation of delivery destination |
| | | O | | | | | | |
| 4 | Reservation | | O | O | O | | O | |
| | | O | | | | | | |
| 5 | Purchasing / Settlement | | O | O | | | O | |
| | | O | | | | | | |
| 6 | Automatic Registration of Phone Number | | | | O | O | | Notify Registered Media |
| | | O→ | | O | | | O | |
| 7 | Map Acquisition | | | O | O | | | |
| | | O | | | | | O | |
| 8 | Automatic Registration of Car-Navigation Destination | | | | O | | | |
| | | O | | | | | | |
| 9 | Reservation of Video Recording of Programs | | O | | | | | IP address of a personal video owned by a person who reserved the program |
| | | O | | | | | O | |

In Table 1, the upper row of the respective actions has metadata for user-side convenience, and the lower row has metadata for supply-side convenience. An image code is embedded with the metadata given in Table 1 and necessary action information for the respective transactions (actions). Thus, once the action information included in the image code is optically read in, editing and integrating of the database systems in the metalevel automatically (according to an instruction in the read-in action information) starts. As such, the electronic commerce data editing means 10d may edit and integrate the supply-side public information and the user-side personal information in the metalevel in conformity with the instruction of the read-in action information based on the supply-side public information such as various media printing, poster printing, input booklets, and product package printing, thereby allowing various business transactions on the open platform. The electronic commerce data editing means 10d for business transactions automatically edit and integrate the supply-side public information such as product information obtained from the image code converting means 10c and user-side personal information (name, address, email address, credit card number, etc.) stored in the personal information storage unit 12 in conformity with the instruction of the action information read in from the image code, and transmits the resulting information to the outside.

In other words, more specifically, the electronic commerce data editing means 10d is capable of implementing the following group of functions:
(a) Selection: Select necessary user-side personal information and supply-side public information;
(b) Integration: Integrate selected necessary data according to data type. More specifically, dynamically edit and integrate the group of user-side personal information and group of supply-side public information provided from the data of the image code in conformity with the instruction of the action information embedded in the metadata;
(c) Retrieval: Retrieve the necessary data in some cases. As an example, the nearest distributor event venue is retrieved based on, for example, an 'address', which is a piece of metadata of the group of user-side personal information, and then presented to the user;
(d) Conversion/substitution of data format: Convert the supply-side public information in the metalevel incorporated in the data of the image code to a data format in the local level ultimately requested by businesses;
(e) Data structuring: Alternatively, structure the data converted to the data format in the local level responding to each of the businesses to conform with the final data structure (ordering data, reservation data, application data, registration data, payment data, and the like) requested by the business;
(f) Encryption: Encrypt the personal information for each piece of metadata so as to conform to the required security level;
(g) Composite functions: Structure the metadata so as to implement the multiple functions. For example, when the user applies to participate in a certain event, structure 1) application data for the event, 2) payment data for participation fee, and 3) presentation and navigation of a map to the venue, and distribute final data to appropriate servers;
(h) Implementation of authentication function: The above group of functions, particularly (f) encryption and (g) composite functions structure a group of data corresponding to an ID (e.g., authentication registration number) in the metadata of the group of the supply-side public information included in the image code data and the group of user-side personal information using multiple encryption keys, thereby implementing the authentication function and providing a high security environment.

In this manner, the electronic commerce data editing means 10d may dynamically select data to edit based on the supply-side public information included in the data of the image code. The electronic commerce data editing means 10d dynamically selects, extracts, edits and integrates the supply-side public information included in the data of the image code. In other words, it encrypts an arbitrary level of security for each piece of metadata using different keys, thereby implementing a mechanism that prevents falsification of automatic recognition codes, masquerading over a network, and hacking (sneaking a look at data), and also prevents even a server system operation manager conducting transactions from creating a bind of pieces of data and extracting them. In other words, the electronic commerce data editing means 10d dynamically selects, extracts, edits, and integrates the metadata (supply-side public information), thereby providing an information society infrastructure that is very strong in actuality.

The image code reader 11 of FIG. 3 is a device that reads in an image code such as a product information-embedded image code. As mentioned in the beginning, the portable information processing devices 65a, 65b, ... are respectively assumed as mobile-phone units in the first embodiment; however, they are not limited thereto. In the case of mobile-phone units, camera-equipped mobile phones, which is installed with a solid-state image sensing camera using an image sensor, is preferred as the portable information processing devices 65a, 65b, ....

In other words, a CCD image sensor or a COMS image sensor is available as the image code reader 11. Alternatively, it may be a complex image sensor having a CCD image sensor on the outside and a COMS image sensor on the inside. Further as already mentioned, the image code does not need to be limited to the two-dimensional code, and various image codes such as a graphic symbol, a one-dimensional code, and a combination of a one-dimensional code and a two-dimensional code are available. There are various codes for the 'two-dimensional code' such as a data matrix, a QR code, a PDF 417, maxi code, and Veri code. If it is a QR code, it may serve as the image code reader 11 as long as the camera has an effective sensor resolution of 300 thousand or greater, preferably 1 million or greater, and a recording pixel count of 300 thousand or greater, preferably 1 million or greater.

The personal information storage unit 12 divides a possessor's (user's) personal information (user-side personal information) into 'first level personal information' and 'second level personal information' and stores them. The 'first level personal information' is the minimum information required for authentication of the portable information processing devices (first terminals) 65a, 65b, ... such as user name and registration number, which are personal information of a low security level. The 'second level personal information' includes the first level personal information and important personal information of a higher security level than the first level personal information such as address, email address, credit card number, bank account name, salary, assets, information of family structure, and physical features, for example. In other words, when the portable information processing devices 65a, 65b, ... are registered users, and the multiple business servers 64a, 64b, ... of different industries have registered licenses, the license registration check server 28 makes the portable information processing devices 65a, 65b, ... convert high security second level personal information to a format transmittable to any one of corresponding business servers 64a, 64b, ... using the personal data extraction means 73e and then transmit the second level personal information to the portable information processing devices 65a, 65b, ....

The temporary storage unit 13 is a storage unit for temporarily storing codes read in from the image code reader 11, and codes obtained from the image code deciphering means 10b and the image code converting means 10c. These storage units may employ flash RAM, for example.

### - ELECTRONIC COMMERCE METHOD -

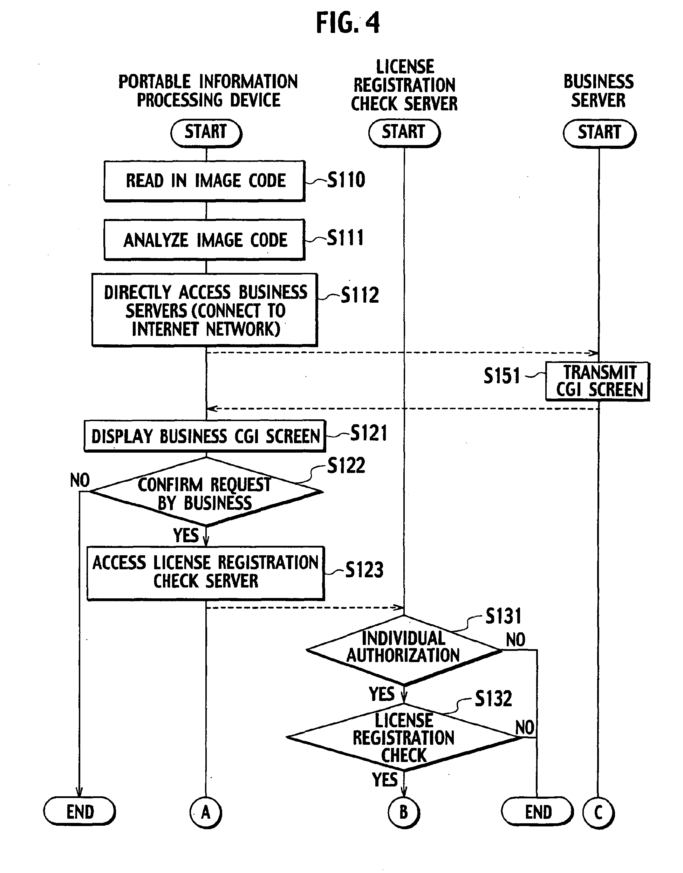

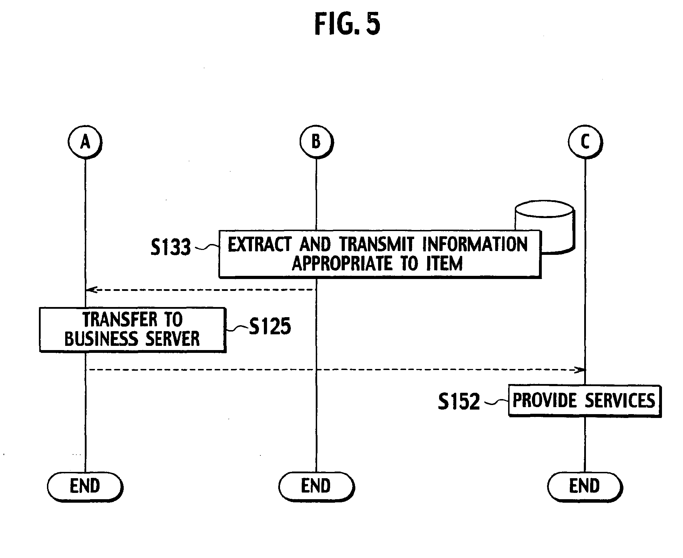

The electronic commerce method according to the first embodiment of the present invention is described using the flowcharts given in FIGS. 4 and 5 and while referring to FIGS. 1 through 3. Note that while the description of the electronic commerce method given below focuses on the first business server 64a connected to the Internet 26, the license registration check server 28, and the portable information processing device 65a in the system structure shown in FIG. 1, a method for electronic commerce conducted between the second business server 64b and the portable information processing device 65a is possible, or the first business server 64a may conduct electronic commerce with the portable information processing device 65b via the license registration check server 28. In other words, the following description is merely an example, and needless to say that various other electronic commerce methods including modifications of this example are applicable.
(a) In step S110, the portable information processing device 65a reads an image code printed on a printed matter such as an advertisement medium or the surface of a product using the image code reader 11, and stores image information (image code) such as a two-dimensional code in the temporary storage unit 13 via the processing control unit 10. In step S111, the portable information processing device 65a deciphers (analyzes) the image code stored in the temporary storage unit 13 using the image code deciphering means 10b. Furthermore, it is converted to character data using the image code converting means 10c. The converted character data is store in the temporary storage unit 13. The character data obtained here is metadata including a URL and the like of a product provider, and is like an ASCII code. In step S112, the electronic commerce data editing means 10d dynamically edits and integrates the first level personal information and the character data in the metalevel in conformity with an instruction of action information included in the read-in metadata. As mentioned above, the 'first level personal information' is the minimum information required for authentication of the portable information processing devices (first terminals) 65a, 65b, ... such as user name and registration number, which is personal information of a low security level. The portable information processing device 65a converts the metadata resulting from editing and integrating the first level personal information (metadata) and the character data (metadata) to local level data in a format requested by the business server 64a via the digital communications network 27 using the telephone function control means 10a, the radio communication unit 4, and the antenna 3, and attempts to directly access the business server 64a without going through the license registration check server 28. In other words, connecting to the Internet 26 via the digital communications network 27, it transmits a request query to the business server 64a and then anticipates and waits for display of the URL screen of the ASP providing server 65 on the display unit 2 of the portable information processing device 65a.
(b) The business server 64a introduces contents of a product and a service of the business in step S151 in response to the received request query, and transmits a necessary screen such as a CGI screen to the portable information processing device 65a in order to request for necessary user-side personal information (second level personal information). When the CGI screen from the business server 64a is displayed on the display unit 2 of the portable information processing device 65a in step S121, the portable information processing device 65a confirms the contents of the product and the service of the business and the contents requested by the business in step S122. While omitted from the drawing, the portable information processing device 65a may transmit new additional requests to the business server 64a if requests for various documents such as inquiry of more detailed product performance and specification, similar products, and the like are necessary, and repeat communication of necessary information for ordering. In step S122, if the possessor of the portable information processing device 65a consents to the contents of the product and the service, and prices and the contents presented by the business server 64a, processing proceeds to step S123. In step S122, if the possessor of the portable information processing device 65a cannot consent to the contents presented by the business server 64a, processing ends, and connection to the Internet 26 is severed. In step S123, the electronic commerce data editing means 10d of the portable information processing device 65a dynamically edits and integrates the second level personal information (metadata) and the metadata (e.g., business URL information) of the business server 64a side in the metalevel, and transmits the result to the license registration checking means 73b. As mentioned above, the 'second level personal information' is important personal information of a higher security level than the first level personal information, and includes addresses, email addresses, credit card numbers, bank account names, salaries, assets, information of family structure, physical features, personal hobbies, personal tastes, and the like, for example. For example, in the case of a business transaction for a piece of clothing, the electronic commerce data editing means 10d selects the second level personal information according to the product or the business such that data of physical features is included. In other words, the portable information processing device 65a connects to the Internet 26 and transmits the necessary second level personal information to the license registration check server 28.
(c) In step S131, the check server processing unit (CPU) 73 of the license registration check server 28 inputs the edited and integrated data of the second level personal information and the business server 64a side data (e.g., business URL information) sent from the portable information processing device 65a over the Internet 26 using the input unit 41. The individual authentication means 73d of the check server processing unit (CPU) 73 conducts authentication for whether a user is registered through referencing the individual authentication data storage unit 114 when the second level personal information has been received from the portable information processing devices 65a, 65b, ... attempting to conduct electronic commerce. If the user is determined in step S131 to be registered, processing proceeds to step S132. If the user is determined in step S131 to be unregistered, the personal data extracting means 73e connects to the Internet 26 and transmits an error message to the portable information processing device 65a via the output unit 42.
(d) Furthermore, in step S132, the license registration checking means 73b of the check server processing unit (CPU) 73 extracts a list of license registered businesses from the license registration data storage unit 113, and checks whether or not the business has a license. If the business is determined in step S132 to have a license, processing proceeds to step S133. If the business is determined in step S132 not to have a license, the license registration checking means 73b connects to the Internet 26 and transmits an error message to the portable information processing device 65a via the output unit 42.
(e) In step S133, the personal data extracting means 73e of the check server processing unit (CPU) 73 extracts appropriate items of the second level personal information (user-side personal information) from the personal information registration data storage unit 115, converts it to a predetermined local level format transmittable from the portable information processing device 65a to the business server 64a, and transmits the result to the portable information processing device 65a over the Internet 26. In step S125, the portable information processing device 65a then transfers the second level personal information (user-side personal information) converted to the predetermined local level format sent from the license registration check server 28 to the business over the Internet 26.
(f) In step S152, the business server 64a deciphers the second level personal information (user-side personal information) converted to the predetermined local level format sent from the portable information processing device 65a, and provides services using a different processing method according to or for the second level personal information. Note that at this time, while convenience store payment, payment through a credit company, or the like is conducted between the business server 64a and the portable information processing device 65a, description thereof is omitted. Needless to say, a method using a payment assistance server through a payment assistance agent for payment between the business server 64a and the portable information processing device 65a may be included as an aspect of the present invention.

While the above-given description is an example focusing on the relationship of the first business server 64a, the license registration check server 28, and the portable information processing device 65a, an electronic commerce method between the portable information processing device 65a and another business server of a different industry such as the second business server 64b is of course possible. In other words, according to the electronic commerce method of the first embodiment of the present invention, since personal information is divided into the 'first level personal information' and the 'second level personal information' and then stored in the personal information storage unit 12 of the respective portable information processing devices 65a, 65b, ..., the portable information processing devices 65a, 65b, ... read in an image code, and dynamically edit and integrate the first level personal information (metadata) of a low security level and metadata of the read-in image code. As a result, necessary preparations for separate electronic commerce with the respective multiple business servers 64a, 64b, ... of different industries via the communications network (the Internet) 26 may be conducted directly without going through the license registration check server 28 having authority to control the business transactions. Afterwards, the second level personal information (metadata), which is important personal information of a higher security level than the first level personal information, is transmitted to the license registration check server 28 having authority to control the business transactions, thereby completing the electronic commerce with the respective business servers 64a, 64b, ... on an open platform. In other words, since conducting necessary preparations for electronic commerce with the portable information processing devices 65a, 65b, ... and the respective business servers 64a, 64b, ... on the open platform while the license registration check server 28 having authority to control the business transactions remains in the background without going through the license registration check server 28 is possible, burden on performance such as memory resources and computing speed of the license registration check server 28 is reduced.

Furthermore, since simple manipulations, basically manipulations for reading in an image code are sufficient without needing complicated keyboard manipulations, and reentry of personal data is unnecessary, simplification of procedures such as product ordering and improvement in business transaction security are possible. Moreover, since mobile phones may be employed as the portable information processing devices 65a, 65b, ... for inputting information, the problems of burden of infrastructure investment, place to carry out business, and time constraints may be resolved.

According to the electronic commerce method of the first embodiment of the present invention, once an image code is simply pointed at, the portable information processing devices 65a, 65b, ...may read in the offline image code, and necessary preparations for electronic commerce between the respective portable information processing devices 65a, 65b, ... and the respective business servers 64a, 64b, ... on the open platform may then be conducted without going through the license registration check server 28 according to the first level personal information of a low security level and the supply-side public information, which is constituted by the image code. Thus, a business transaction procedure (a set of information and functions) may be easily completed without interactive data communication while reducing the performance burden of the license registration check server 28.

For example, when the supply-side public information is read in as an image code, the electronic commerce data editing means 10d may dynamically edit and integrate in the metalevel, posting media, product information, and specified URL included in the offline supply-side public information, and the user name and email address as the first personal information, and communicate necessary information for ordering anytime and any number of times accompanying requests for various documents such as inquiry of more detailed product performance and specification, similar products, and the like.

When necessary communication of information for ordering such as product specification using the first level personal information is completed, processing may enter an order procedure mode via the license registration check server 28 using the second level personal information, which is important personal information of a higher security level than the first level personal information. Since the 'second level personal information' is information including address, email address, credit card number, bank account name, salary, assets, information of family structure, physical features, and the like while the 'first level personal information' is minimum necessary information for authentication for the portable information processing devices (first terminals) 65a, 65b, ... such as user name and registration number, the security level for personal data may be increased. Thus, with the electronic commerce method according to the first embodiment of the present invention, if the respective business servers 64a, 64b, ... on the open platform obtain consent from the user, the important personal information of a high security level such as address, email address, credit card number, bank account name, salary, assets, information of family structure, and physical features may be acquired any time from the license registration check server 28 having authority to control the business transactions according to need.

As such, since the electronic commerce data editing means 10d built in to the portable information processing devices 65a, 65b, ... may dynamically select the first level personal information and the second level personal information used for editing and integrate them according to stage of business transaction, performance burden on the license registration check server 28 may be reduced and manipulation interactive communication of data is unnecessary, and thus the transaction procedure may be easily completed. In other words, the user reads each image code with a single touch of a button using the portable information processing devices 65a, 65b, ...and then dynamically combines static data (supply-side public information included in the image codes) and the user-side personal information stored in the portable information processing devices 65a, 65b, ... in conformity with the instruction of action information included in the image codes. This allows the respective portable information processing devices 65a, 65b, ... and the respective business servers 64a, 64b, ... on the open platform to freely communicate information any number of times, and finally complete the transactions via the license registration check server 28.

With the conventional static system,
(a) a dynamic open platform allowing dissimilar businesses to enter is impossible, and one-stop services and WEB services integrating these cannot be implemented; and
(b) risk of leakage (particularly from insiders) of 'personal information attached with an ID' from the server cannot be avoided with a type of service implementing method that creates a bind of data using one ID (a single unique number, personal ID, or the like).

The two problems of (a) and (b) may be simultaneously avoided, and performance burden of the license registration check server 28 may be reduced by the 'mobile metadatabase system' provided by the portable information processing devices 65a, 65b, .... Furthermore, since the image code reader 11 is built in to the portable information processing devices 65a, 65b, ..., there are advantages where the offline medium including image codes to be read is not fixed, and can be deployed in any position. In other words, according to the electronic commerce method of the first embodiment, since the personal information storage unit 12 stored with the first level personal information and the second level personal information is built in, extraction of the user-side personal information from any place (offline environment) on the globe, capturing and editing of the read-in image codes as the supply-side public information, authentication by communication of information with the respective business servers 64a, 64b, ... on the open platform according to stage of business transaction, and management of the second level personal information is possible.

In other words, according to the electronic commerce method of the first embodiment, reading of image codes as supply-side public information is possible regardless of location or medium, and transmitting the offline supply-side public information and the first level personal information to a network terminal of the respective business servers 64a, 64b, ... on the open platform is possible without going through the license registration check server 28. The respective business servers 64a, 64b, ... then may acquire the second level personal information as needed from the license registration check server 28 having authority of controlling the business transaction via the communications network (Internet) 26. By establishing such a mobile metadatabase system, various actions such as shopping, requesting for documents, and making reservations may be completed at once anytime, anywhere by use of the current information system as is without the stress of complicated inputting of user-side personal information.

Furthermore, with the electronic commerce method according to the first embodiment of the present invention, network burden and computation burden on the license registration check server 28 are reduced since the user-side personal information is given to the portable information processing devices 65a, 65b, ... instead of to the license registration check server 28 having authority of controlling the business transaction, computation and processing for dynamic editing and integration are conducted in the respective portable information processing devices 65a, 65b, ..., and communication of information between the respective portable information processing devices 65a, 65b, ... and the respective business servers 64a, 64b, ... on the open platform is possible without going through the license registration check server 28. Moreover, use of radio communication zones are reduced by the portable information processing devices 65a, 65b, ... dynamically selecting and integrating the supply-side public information included in the offline image code and the first level personal information or the second level personal information. Since communication is completed in one time when intercommunication of ten times or more is normally required, there is an effect of reducing use of effective radio communication zones.

More specifically, while necessary user-side personal information differs greatly due to type of service or offline code, as shown in Table 2, since processing for dynamically selecting and integrating of the first level personal information and the second level personal information is performed, unnecessary user-side personal information being transmitted to the outside may be prevented by transmitting only address and name for a document request and only credit card number for payment, and ensuring security and selecting security level according to need may be executed.

**[Table 2]**

| types of transactions (actions) | | metadata (user-side personal information) | | | | | | | remarks |
|---|---|---|---|---|---|---|---|---|---|
| | | Date & Time | Full Name | Destination Address | Home Position Information | Settlement Card Information | Email Address | Phone Number | |
| 1 | Access to HP of Specific Product Service | | | | | | | | |
| | | | O | | | | O | | |
| 2 | Document Request | | O | O | | | O | | |
| | | | | | | | | | |
| 3 | Ordering | O | O | O | O→ | | O | O | for confirmation of delivery destination |
| | | | | | | | | | |
| 4 | Reservation | O | O | O | | | O | | |
| | | | | | | | | | |
| 5 | Purchasing / Settlement | O | O | O | O | O | O | O | |
| | | | | | | | | | |
| 6 | Automatic Registration of Phone Number | | | | | | | | Notify Registered Media |
| | | | | | | | | | |
| 7 | Map Acquisition | | | | O | | | | |
| | | | | | | | | | |
| 8 | Automatic Registration of Car-Navigation Destination | | | | | | | | |
| | | | | | | | | | |
| 9 | Reservation of Video Recording of Programs | O | | O→ | | | | | IP address of a personal video owned by a person who reserved the program |
| | | | | | | | | | |

In Table 2, the upper row of the respective actions has metadata for user-side convenience, and the lower row has metadata for supply-side convenience are the same as in Table 1.

### (SECOND EMBODIMENT)

### - ELECTRONIC COMMERCE SYSTEM -

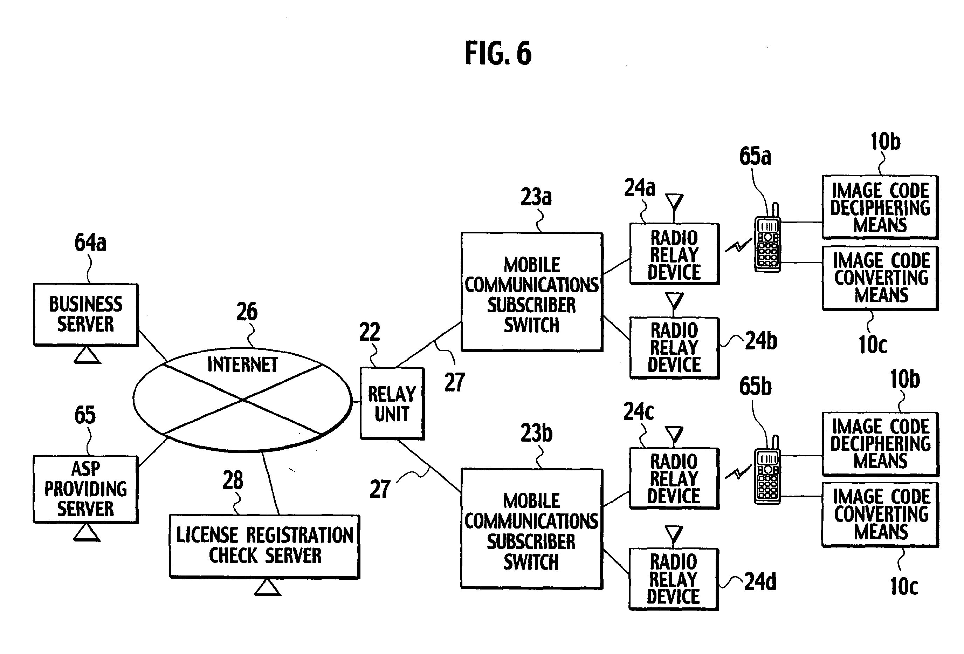

An electronic commerce system according to the second embodiment of the present invention has the structure of the electronic commerce system according to the first embodiment shown in FIG. 1, further including an application service provider (ASP) providing server 65, as shown in FIG. 6. The ASP providing server 65 is a server providing application services to the business server 64a by coordinating with the license registration check server, and is connected to the Internet 26. Note that a structure where a single ASP providing server 65 and a single business server 64 connected to the Internet 26 is given in FIG. 6; however, in reality, it is of course applicable to an open platform where multiple business servers of different industries and multiple ASP providing servers of different applications are connected to the Internet 26.

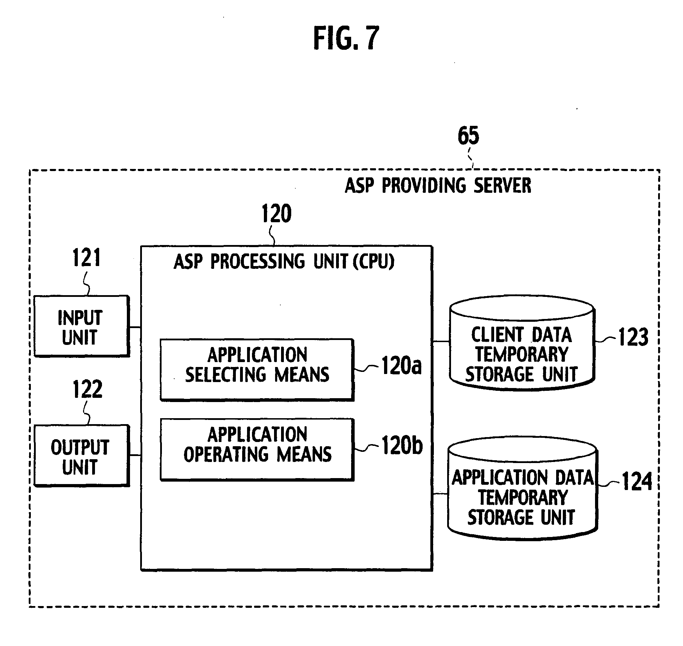

The ASP providing server 65 includes an input unit 121, an output unit 122, an ASP processing unit (CPU) 120, a client data temporary storage unit 123, and an application data temporary storage unit 124, as shown in FIG. 7. The ASP processing unit (CPU) 120 includes an application selecting means 120a and an application operating means 120b. The input unit 121 means an input unit including a keyboard, a mouse, and related parts and allowing wired and wireless information communication with all communication media. The output unit 122 means an output unit allowing information communication to a liquid crystal display, a CRT display, and wired/wireless communication media.

The application selecting means 120a selects an application storing data using the user-side personal information from the accessed portable information processing devices 65a, 65b, ..., service contents, and information of the business server 64a, and stores these pieces of information in the client data temporary storage unit 123. The application operating means 120b first requests the portable information processing devices 65a, 65b, ... for necessary personal data (user-side personal information) for the specified application, and then stores the user-side personal information received from the portable information processing devices 65a, 65b, ... in the application data temporary storage unit 124. The application consists of conducting processing for the portable information processing devices 65a, 65b, ..., and transferring results thereof as the user-side personal information to the appropriate business server 64a via the output unit 122.

### - ELECTRONIC COMMERCE METHOD -

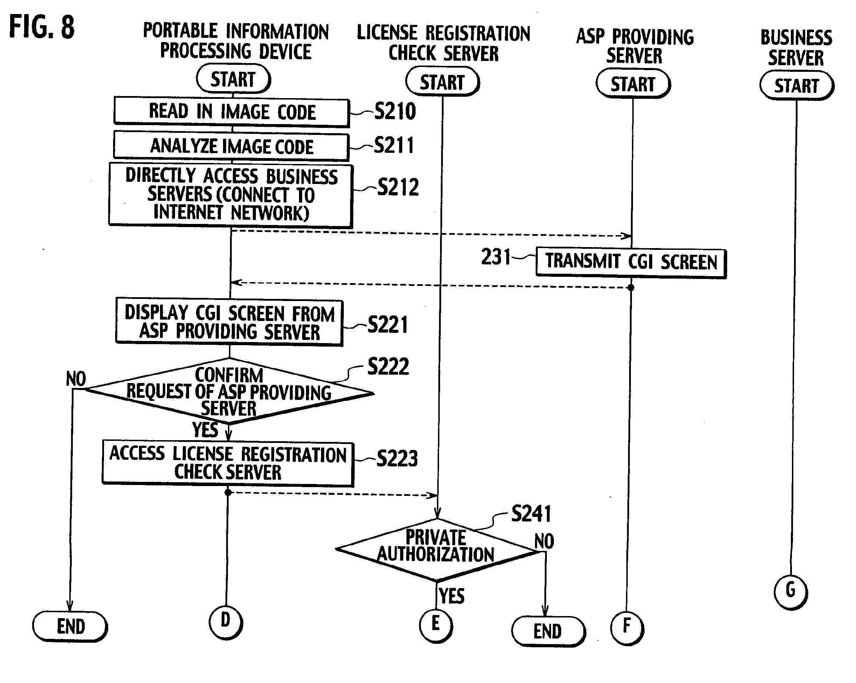

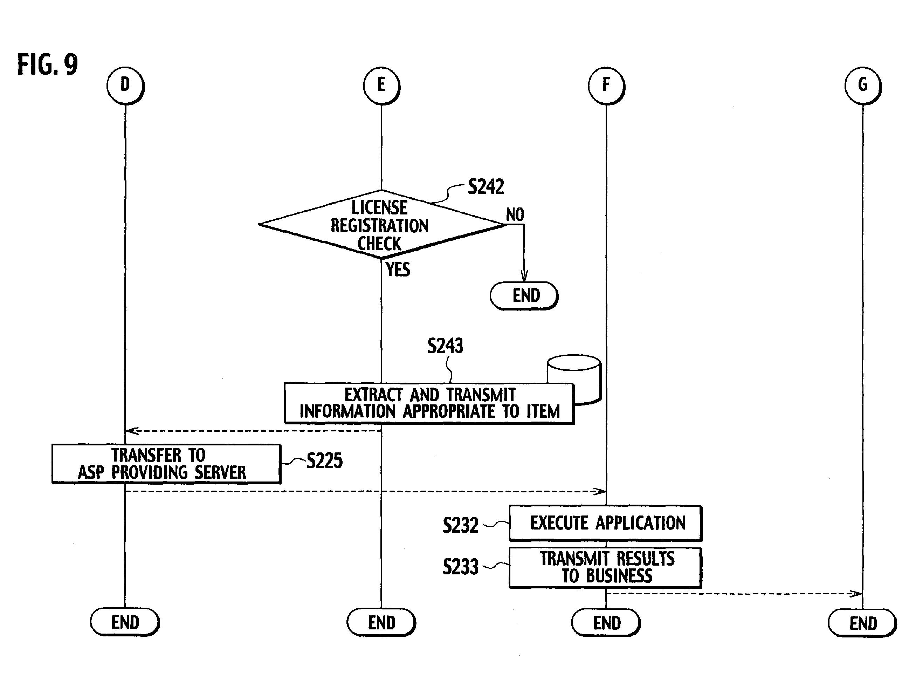

The electronic commerce method according to the second embodiment of the present invention is described using the flowcharts given in FIGS. 8 and 9 and while referring to FIGS. 2, 3, 6 and 7. Note that the description of the electronic commerce method given below focusing on the first business server 64a connected to the Internet 26, the license registration check server 28, the ASP providing server 65, and the portable information processing device 65a in the system structure shown in FIG. 6 is merely an example. In other words, a case where electronic commerce is conducted with the portable information processing device 65b, the business server 64a, the license registration check server 28, and the ASP providing server 65 is possible. Furthermore, as mentioned before, since the electronic commerce method according to the second embodiment is applicable to an open platform where multiple business servers of different industries and multiple ASP providing servers of different applications are connected to the Internet 26, the case where electronic commerce is conducted with other business servers (omitted from the drawing) such as the second business server 64b shown in FIG. 1, the license registration check server 28, the ASP providing server 65, and the portable information processing device 65a or 65b is possible, and may include a relationship with other ASP providing servers. In other words, the following description is merely an example, and needless to say that various other electronic commerce methods in other various open platforms including modifications of this example are applicable.
(a) Basically, the same processing as in steps S110 through S112 in FIG. 4 of the electronic commerce according to the first embodiment is conducted in steps S210 through S212. However, in step S112, the portable information processing device 65a dynamically edits and integrates in the metalevel the first level personal information (metadata) and character data (metadata) using the electronic commerce data editing means 10d in conformity with an instruction of action information included in an image code, and tries to directly access the ASP providing server 65 without going through the license registration check server 28 in conformity with an instruction of action information included in the image code. In other words, it connects to the Internet 26 via the digital communications network 27, transmits a request query to the ASP providing server 65, and then anticipates and waits for display of the URL screen of the ASP providing server 65 on the display unit 2 of the portable information processing device 65a.
(b) The ASP providing server 65 specifies an application according to service using the application selecting means 120a based on information stored in the client data temporary storage unit of the ASP providing server in compliance with a request inquiry received. Then, if there is necessary data for executing the specified application, a CGI screen having required items is transmitted to the portable information processing device 65a in step S231 in order to collect them as user-side personal information. In other words, in step S231, a necessary screen such as a CGI screen is transmitted to the portable information processing device 65a to request necessary user-side personal information while referring to contents of a product and a service of the business, contents of the application, and the user-side personal information. When the CGI screen from the ASP providing server 65 is displayed on the display unit 2 of the portable information processing device 65a in step S221, the portable information processing device 65a confirms the requested contents in step S222. While omitted from the drawing, the portable information processing device 65a may transmit new additional requests to the ASP providing server 65 if requests for various documents such as inquiry of more detailed product performance and specification, similar products, and the like are necessary, and repeat communication of necessary information for ordering. In step S222, if the possessor of the portable information processing device 65a consents to the contents of the product and the service, and contents such as price and delivery date presented by the ASP providing server 65, processing proceeds to step S223. In step S222, if the possessor of the portable information processing device 65a cannot consent to the contents presented by the ASP providing server 65, processing ends, and connection to the Internet 26 is severed. In step S223, the electronic commerce data editing means 10d of the portable information processing device 65a dynamically edits and integrates the second level personal information (metadata) and the metadata (e.g., business URL information) of the ASP providing server 65 side in the metalevel, and transmits the result to the license registration checking means 73b. In other words, the portable information processing device 65a connects to the Internet 26 and transmits the necessary second level personal information to the license registration check server 28.
(c) In step S241, the check server processing unit (CPU) 73 of the license registration check server 28 inputs the edited and integrated data of the second level personal information and the ASP providing server 65 side data (e.g., business URL information) sent from the portable information processing device 65a over the Internet 26 using the input unit 41. The individual authentication means 73d of the check server processing unit (CPU) 73 conducts authentication for whether a user is registered referencing the individual authentication data storage unit 114 when the second level personal information has been received from the portable information processing devices 65a, 65b, ... attempting to conduct electronic commerce. If the user is determined in step S241 to be registered, processing proceeds to step S242. If the user is determined in step S241 to be unregistered, the personal data extracting means 73e connects to the Internet 26 and transmits an error message to the portable information processing device 65a via the output unit 42.
(d) Furthermore, in step S242, the license registration checking means 73b of the check server processing unit (CPU) 73 extracts a list of license registered businesses from the license registration data storage unit 113, and checks whether or not the business has acquired a license. If the business is determined in step S242 to have acquired a license, processing proceeds to step S243. If the business is determined in step S242 to have not acquired a license, the license registration checking means 73b connects to the Internet 26 and transmits an error message to the portable information processing device 65a via the output unit 42.
(e) In step S243, the personal data extracting means 73e of the check server processing unit (CPU) 73 extracts appropriate items of the second level personal information (user-side personal information) from the personal information registration data storage unit 115, converts it to a predetermined local level format transmittable from the portable information processing device 65a to the business server 64a, and transmits the result to the portable information processing device 65a over the Internet 26. In step S225, the portable information processing device 65a then transfers the second level personal information (user-side personal information) converted to the predetermined local level format sent from the license registration check server 28 to the business server 64a over the Internet 26.
(f) In step S232, the ASP providing server 65 deciphers the second level personal information (user-side personal information) converted to the predetermined local level format sent from the portable information processing device 65a, and executes the application according to the second level personal information or by different processing methods corresponding to the second level personal information. In step S233, result of executing the application between the ASP providing server 65 and the portable information processing device 65a is stored in the client data temporary storage unit 123 and then transmitted to the business server 64a.

As described above, according to the electronic commerce method of the second embodiment of the present invention, since personal information is divided into the 'first level personal information' and the 'second level personal information' and then stored in the personal information storage unit 12 of the respective portable information processing devices 65a, 65b, ..., the portable information processing devices 65a, 65b, ... read in an image code, and dynamically edit and integrate the first level personal information of a low security level and data of the read-in image code. As a result, necessary preparation for electronic commerce with the ASP providing server 65 via the communications network (the Internet) 26 may be conducted directly without going through the license registration check server 28 having authority to control the business transactions. Afterwards, the second level personal information, which is important personal information of a higher security level than the first level personal information, is transmitted to the license registration check server 28 having authority to control the business transactions, thus completing execution of the application with the ASP providing server 65. In other words, since conducting necessary preparations for execution of the application with the portable information processing devices 65a, 65b, ... and the ASP providing server 65 while the license registration check server 28 having authority to control the business transactions remains in the background without going through the license registration check server 28 is possible, burden on performance such as memory resources and computing speed of the license registration check server 28 is reduced.

In addition, since computation processing according to an instruction of the action information incorporated in the image code as metadata is automatically conducted, simple manipulations, basically manipulations for reading in an image code are sufficient without needing complicated keyboard manipulations. Furthermore, since reentry of personal data is unnecessary, simplification of procedures such as product ordering and improvement in business transaction security are possible. Moreover, since mobile phones may be employed as the portable information processing devices 65a, 65b, ... for inputting information, the problems of burden of infrastructure investment, place to carry out business, and time constraints may be resolved.

According to the application execution method of the second embodiment of the present invention, once an image code is simply pointed at, the portable information processing devices 65a, 65b, ... may read in metadata incorporated in the offline image code, and necessary preparations for executing an application between the respective portable information processing devices 65a, 65b, ... and the ASP providing server 65 may then be conducted without going through the license registration check server 28 according to the first level personal information of a low security level and the supply-side public information, which is constituted by the image code. Thus, execution of an application may be easily completed without interactive data communication while reducing the performance burden of the license registration check server 28.

For example, when the supply-side public information is read in as image codes, the electronic commerce data editing means 10d built into the respective portable information processing devices 65a, 65b, ... may dynamically edit and integrate in the metalevel, posting media, product information, and specified URL included in the offline supply-side public information, and the user name and email address as the first personal information, and communicate necessary information for application execution anytime and any number of times accompanying requests for various documents such as inquiry of more detailed product performance and specification, similar products, and the like.

When necessary communication of information for ordering such as product specification using the first level personal information is completed, processing may enter an order procedure mode for the application via the license registration check server 28 using the second level personal information, which is important personal information of a higher security level than the first level personal information. Thus, with the electronic commerce method according to the second embodiment of the present invention, if the ASP providing server 65 obtains consent from the user, the important personal information of a high security level such as address, email address, credit card number, bank account name, salary, assets, information of family structure, and physical features may be acquired any time from the license registration check server 28 having authority to control the business transactions according to need, allowing execution of the application.

As such, since the electronic commerce data editing means 10d built in to the portable information processing devices 65a, 65b, ... may dynamically select the first level personal information (metadata) and the second level personal information (metadata) used for dynamic editing in the metalevel and integrate them according to stage of business transaction, performance burden on the license registration check server 28 may be reduced and manipulation interactive communication of data is unnecessary, and thus the transaction procedure may be easily completed. In other words, the user uses the portable information processing devices 65a, 65b, ... to read each image code with a single touch of a button, and dynamically combine static metadata (supply-side public information included in the image codes) and the user-side personal information (metadata) stored in the portable information processing devices 65a, 65b, .... This allows the respective portable information processing devices 65a, 65b, ... and the ASP providing server 65 to freely communicate information any number of times, and finally complete the transactions via the license registration check server 28.

### (THIRD EMBODIMENT)

### - ELECTRONIC COMMERCE SYSTEM -

An electronic commerce system according to the third embodiment of the present invention, as with the electronic commerce system according to the first embodiment shown in FIG. 1, includes the Internet (communications network) 26, a first business server 64a, a second business server 64b, ... connected to the Internet 26, a license registration check server 28, and a relay unit 22. Multiple (numerous) portable information processing devices 65a, 65b, ... have an open platform structure, which is omitted from the drawing, connected to the Internet 26 via a digital communications network 27

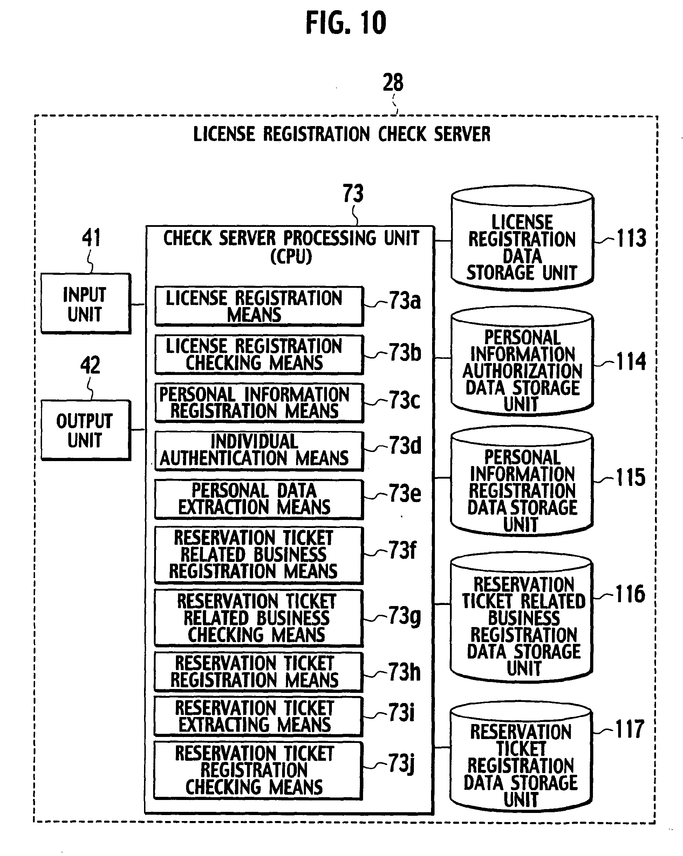

However, the inner structure of the hardware configuration of the license registration check server 28 differs in the electronic commerce system according to the third embodiment of the present invention. In other words, the license registration check server 28 used in the electronic commerce system according to the third embodiment is basically based on the structure of the license registration check server 28 according to the first embodiment shown in FIG. 2; however, as shown in FIG. 10, a reservation ticket related business registration means 73f, a reservation ticket related business checking means 73g, a reservation ticket registration means 73h, a reservation ticket extracting means 73i, and a reservation ticket registration checking means 73j being further included in the check server processing unit (CPU) 73 is what is different from the structure of the license registration check server 28 according to the first embodiment shown in FIG.2. Furthermore, a structure further including a reservation ticket related business registration data storage unit 116 and a reservation ticket registration data storage unit 117 in the data storage unit is also different from the structure of the license registration check server 28 according to the first embodiment shown in FIG. 2.

The reservation ticket related business registration means 73f registers information of a business server 64a which has issued a reservation ticket, where that information is stored in the reservation ticket related business registration data storage unit 116. The reservation ticket related business checking means 73g refers to a list of the business server 64a stored in the reservation ticket related business registration data storage unit 116 and then checks whether it is a business server 64a for reservation ticket registration.

The reservation ticket registration means 73h stores the reservation ticket in the reservation ticket registration data storage unit 117. The reservation ticket extracting means 73i extracts the reservation ticket from the reservation ticket registration data storage unit 117 and transmits it to the appropriate business server 64a. The reservation ticket registration checking means 73j checks for validity and registration of the reservation ticket referring to the reservation ticket registration data storage unit 117.

### - ELECTRONIC COMMERCE METHOD -

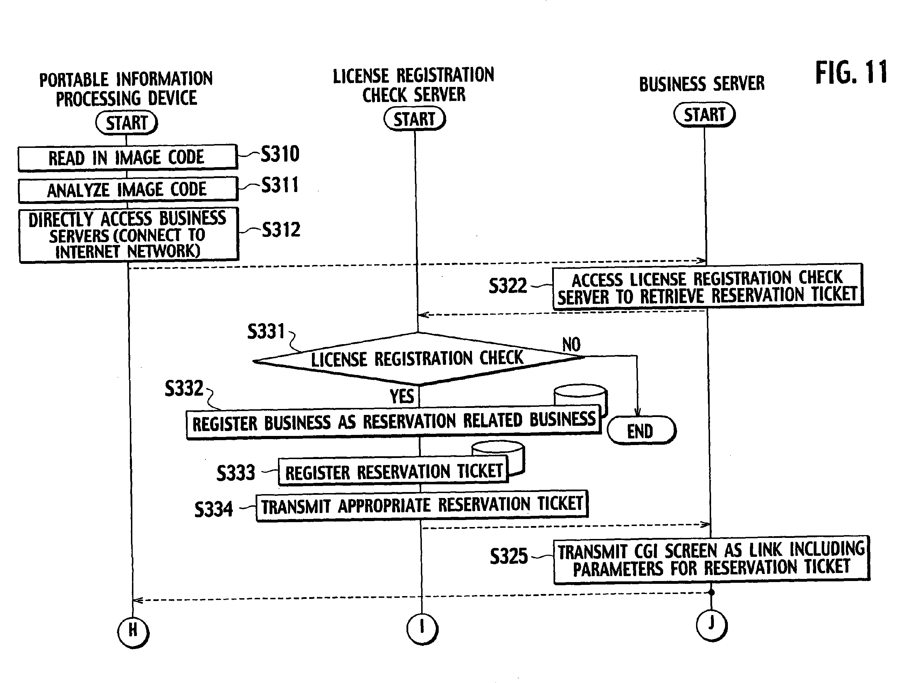

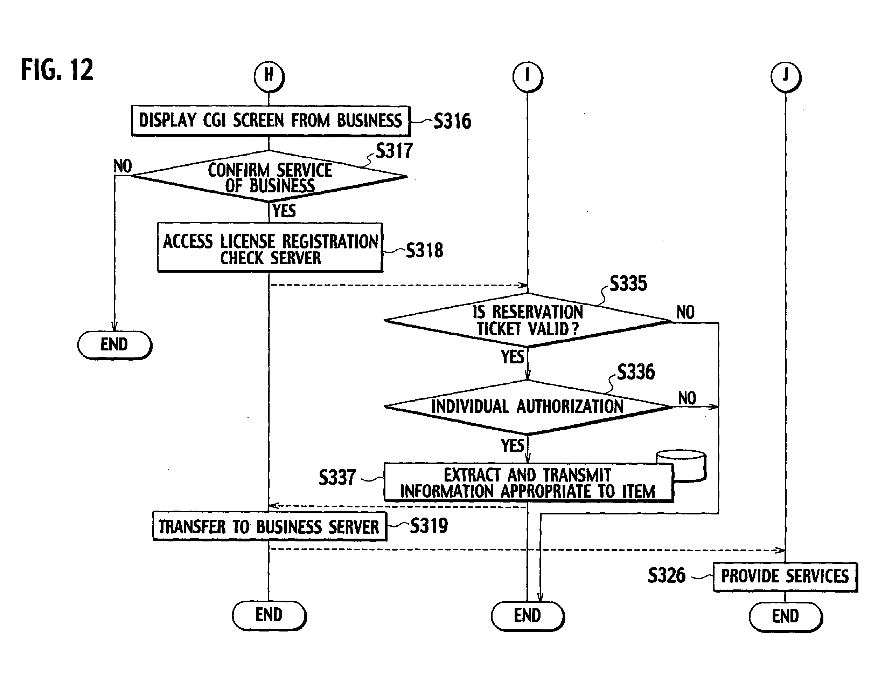

The electronic commerce method according to the third embodiment of the present invention is described using the flowcharts given in FIGS. 11 and 12 and while referring to FIGS. 1, 3, and 10. Note that while the description of the electronic commerce method given below focuses on the first business server 64a connected to the Internet 26, the license registration check server 28, and the portable information processing device 65a in the system structure shown in FIG. 1, as described with the electronic commerce method according to the first embodiment, a method for electronic commerce conducted between the second business server 64b and the portable information processing device 65a is possible, or the first business server 64a may conduct electronic commerce with the portable information processing device 65b via the license registration check server 28. Further alternatively, electronic commerce may be conducted with other business servers of various industries constituting an open platform. In other words, the following description is merely an example, and needless to say that various other electronic commerce methods including modifications of this example are applicable.
(a) Basically, the same processing as in steps S110 through S112 in FIG. 4 of the electronic commerce according to the first embodiment is conducted in steps S310 through S312. In steps S312, the electronic commerce data editing means 10d of the portable information processing device 65a dynamically edits and integrates in the metalevel the first level personal information (metadata) and read-in supply-side public information data (metadata) according to an instruction of action information embedded as metadata in an image code, and connects to the Internet. Information such as URL of the business server 64a is transmitted to the license registration check server 28. In other words, the portable information processing device 65a connects to the Internet 26 via the digital communications network 27, transmits a request query to the business server 64a, and then anticipates and waits for display of the URL screen of the business on the display unit 2 of the portable information processing device 65a.
(b) In step S322, the business server 64a accesses the license registration check server 28 so as to obtain a reservation for a one-time business transaction with the portable information processing device 65a from the license registration check server 28 in conformity with the received request query. Note that while omitted from the drawing, before accessing the license registration check server 28 for a reservation ticket, the portable information processing device 65a and the business server 64a repeat communication of necessary information such as request for various documents such as inquiry for further detailed product performance or specification, and similar products, and then access the license registration check server 28 to issue a reservation ticket when the time is right for that processing.
(c) Upon being accessed from the business server 64a, the license registration check server 28 first references the license registration data storage unit 113 in step S331 to check the license of the business server 64a via the license registration checking means 73b. If the business server 64a is already registered in step S331, processing proceeds to step S332, and if the business server 64a is determined to not be registered in step S331, the license registration checking means 73b of the license registration check server 28 connects to the Internet 26 via the output unit 42 and transmits an error message to the portable information processing device 65a. In step S332, an appropriate reservation ticket is extracted from the reservation ticket registration data storage unit 117 using the reservation ticket extracting means 73i, and checks whether the reservation ticket has been transmitted once (used) using the reservation ticket registration checking means 73j. If it is a new reservation ticket, then in steps S332, a one-time reservation ticket (session ID) is issued to this business server 64a via the reservation ticket related business registration means 73f, and registers (enters) the business server 64a as a one-time reservation ticket related business server in the reservation ticket related business registration data storage unit 116. In step S333, contents of the one-time reservation ticket (session ID) is entered in the reservation ticket registration data storage unit 117 using the reservation ticket registration means 73h. In step S334, the reservation ticket is then transmitted to the issued business server 64a.
(d) In step S325, contents of a product and a service of the business are introduced according to the received request query, and a necessary screen such as a CGI screen is transmitted to the portable information processing device 65a as the reservation ticket (session ID) in order to request for necessary user-side personal information (second level personal information).
(e) In the portable information processing device 65a, the CGI screen as a link including parameters for the reservation ticket from the business server 64a is displayed in step S316. In step S317, the portable information processing device 65a confirms the contents of the product and the service of the business and contents requested by the business. While omitted from the drawing, the portable information processing device 65a may transmit new additional requests to the business server 64a if requests for various documents such as inquiry of more detailed product performance and specification, similar products, and the like are necessary, and repeat communication of necessary information for ordering. In step S317, if the possessor of the portable information processing device 65a consents to the contents of the product and the service, and prices and the contents presented by the business server 64a, processing proceeds to step S123. In step S317, if the possessor of the portable information processing device 65a cannot consent to the contents presented by the business server 64a, processing ends, and connection to the Internet 26 is severed. In step S318, the electronic commerce data editing means 10d of the portable information processing device 65a dynamically edits and integrates the second level personal information (metadata), the metadata (e.g., business URL information) of the business server 64a side, and reservation ticket information (metadata) in the metalevel, and transmits the result to the license registration checking means 73b. As describe above, namely, in step S318, the portable information processing device 65a connects to the Internet 26 and transmits the necessary second level personal information to the license registration check server 28.
(f) In step S335, the check server processing unit (CPU) 73 of the license registration check server 28 inputs the edited and integrated data of the second level personal information, the business server 64a side data (e.g., business URL information), and the reservation ticket information sent from the portable information processing device 65a over the Internet 26 using the input unit 41. Furthermore, in step S335, the license registration check server 28 references the reservation ticket registration data storage unit 117 to confirm validity of the reservation ticket using the reservation ticket registration checking means 73j. If validity of the reservation ticket (session ID) is denied in step S335, connection to the Internet 26 is established, and an error message is transmitted to the portable information processing device 65a via the output unit 42. If the reservation ticket is determined not to be invalid such as being expired in step S335, processing proceeds to step S336.
(g) In step S336, the individual authentication means 73d of the check server processing unit (CPU) 73 references the individual authentication data storage unit 114 and then conducts authentication for whether a user is registered using the second level personal information transmitted from the portable information processing devices 65a, 65b, .... If the user is determined in step S336 to be registered, processing proceeds to step S337. If the user is determined in step S336 to be unregistered, the personal data extracting means 73e connects to the Internet 26 and transmits an error message to the portable information processing device 65a via the output unit 42.
(h) In step S337, the personal data extracting means 73e of the check server processing unit (CPU) 73 extracts appropriate items of the second level personal information (user-side personal information) from the personal information registration data storage unit 115, converts them to a predetermined local level format transmittable from the portable information processing device 65a to the business server 64a, and transmits the result to the portable information processing device 65a over the Internet 26.
(i) In step S319, the portable information processing device 65a then transfers the second level personal information (user-side personal information) converted to the predetermined local level format sent from the license registration check server 28 to the business server 64a that has issued the reservation ticket (session ID) over the Internet 26.
(j) In step S326, the business server 64a that has issued the reservation ticket (session ID) deciphers the second level personal information (user-side personal information) converted to the predetermined local level format, and conducts a one-time business transaction (service) reserved by the reservation ticket (session ID) for the portable information processing device 65a.

As described above, according to the electronic commerce method of the third embodiment of the present invention, once an image code is read in, the first level personal information (metadata) of a low security level and metadata of the read-in image code are dynamically edited and integrated in the metalevel. As a result, necessary preparations for electronic commerce with any one of the respective multiple business servers 64a, 64b, ... via the communications network (the Internet) 26 may be conducted directly without going through the license registration check server 28 having authority to control the business transactions. Furthermore, once the preparation stage is finished, necessary preparations for electronic commerce may proceed via a screen as a link including parameters for the reservation ticket by receiving the reservation ticket (session ID) from the license registration check server 28 having authority to control the business transactions.

Once inspection via the screen as a link including parameters for the reservation ticket is completed, any one of the corresponding business servers 64a, 64b, ... may transmit the second level personal information, which is important personal information of a higher security level than the first level personal information, to the license registration check server 28 having authority to control the business transactions, thereby completing the one-time electronic commerce with any one of the corresponding business servers 64a, 64b, .... In other words, conducting necessary preparations for one-time electronic commerce with the portable information processing devices 65a, 65b, ... and the respective business servers 64a, 64b, ...without going through the license registration check server 28 is possible where the license registration check server 28 having authority to control the business transactions remains in the background. Therefore, burden on performance such as memory resources and computing speed of the license registration check server 28 is reduced.

Furthermore, since simple manipulations, basically manipulations for reading in an image code without complicated keyboard manipulations are sufficient, and reentry of personal data is unnecessary, simplification of procedures such as product ordering and improvement in business transaction security are possible. Moreover, since mobile phones may be employed as the portable information processing devices 65a, 65b, ... for inputting information, the problems of burden of infrastructure investment, place to carry out business, and time constraints may be resolved.

According to the electronic commerce method of the third embodiment of the present invention, once an image code is simply pointed at, the portable information processing devices 65a, 65b, ... may read in metadata incorporated in the image code, and necessary preparations for one-time electronic commerce between the respective portable information processing devices 65a, 65b, ... and any one of the corresponding business servers 64a, 64b, ... may then be conducted without going through the license registration check server 28 according to the first level personal information of a low security level and the supply-side public information, which is constituted by the image code. Thus, a business transaction procedure (combination of information and functions) may be easily completed without interactive data communication while reducing the performance burden of the license registration check server 28.

For example, when the supply-side public information is read in as image codes, the electronic commerce data editing means 10d may dynamically edit and integrate in the metalevel, posting media, product information, and specified URL included in the supply-side public information, and the first personal information, and communicate necessary information for ordering anytime and any number of times without going through the license registration check server 28 accompanying requests for various documents such as inquiry of more detailed product performance and specification, similar products, and the like.

When necessary communication of information for ordering such as product specification using the first level personal information is completed, processing may enter an order procedure mode via the license registration check server 28 using the second level personal information, which is important personal information of a higher security level than the first level personal information. Thus, with the electronic commerce method according to the third embodiment of the present invention, if the business servers 64a, 64b, ... constituting an open platform obtain consent from the user, the important personal information of a high security level such as address, email address, credit card number, bank account name, salary, assets, information of family structure, and physical features may be acquired as the second level personal information any time from the license registration check server 28 having authority to control the business transactions according to need.

As such, since the electronic commerce data editing means 10d built in to the portable information processing devices 65a, 65b, ... may dynamically select the first level personal information and the second level personal information used for editing and integrate them according to stage of business transaction, performance burden on the license registration check server 28 may be reduced and manipulation interactive communication of data is unnecessary, and thus the one-time transaction procedure may be easily completed via the reservation ticket (session ID). In other words, the user uses the portable information processing devices 65a, 65b, ... to read each image code with a single touch of a button and dynamically combine static data (supply-side public information included in the image codes) and the user-side personal information stored in the portable information processing devices 65a, 65b, .... This allows the respective portable information processing devices 65a, 65b, ... and the any one of the corresponding business server 64a, 64b, ... to freely communicate information any number of times, and finally complete the one-time transaction (session) using the reservation ticket (session ID) via the license registration check server 28.

For example, with financial institution payment, the portable information processing device 65a requests for payment to the license registration check server 28, and the business server (financial institution) 64a verifies balance in a corresponding account of the user of the business server (financial institution) 64a, and approves payment to the portable information processing device 65a. If payment is approved, the user of the portable information processing device 65a then withdraws a desired amount of money from the corresponding account. However, a time lag occurs between the step of requesting payment to the business server (financial institution) 51 and the step of withdrawing a desired amount of money from the corresponding account, and another business withdraws the balance from the corresponding account first during that time lag. If this happens, withdrawal by the user of the portable information processing device 65a may be impossible. In the third embodiment, a reservation ticket (account lock numbered ticket) is issued in step S334, as shown in FIG. 11. In other words, the license registration check server 28 issues a reservation ticket (account lock numbered ticket) to the business server (financial institution) in step S334, and may lock that account in step S326 until operation of the portable information processing device 65a corresponding to the reservation ticket (account lock numbered ticket) is completed so as to prevent withdraw by the user to become impossible.

### (OTHER EMBODIMENTS)

As described above, the present invention has been described according to the first through the third embodiment; however, it should not be perceived that descriptions and drawings forming a part of this disclosure are not intended to limit the spirit and scope of the present invention. Various alternative embodiments, working examples, and operational techniques will become apparent from this disclosure for those skills in the art.

For example, if supply-side public information and action information, which are metadata incorporated in an image code, are cryptographically encoded, security is further increased. Particularly, with the electronic commerce system according to the third embodiment, if supply-side public information and action information are cryptographically encoded, the reservation ticket (session ID) for conducting a one-time business transaction may be encoded. Thus, a favorable effect of being able to avoid the one-time business transaction (session) from being tapped is possible by simultaneously using a secured communication channel (SSL: secure socket layer) or the like.

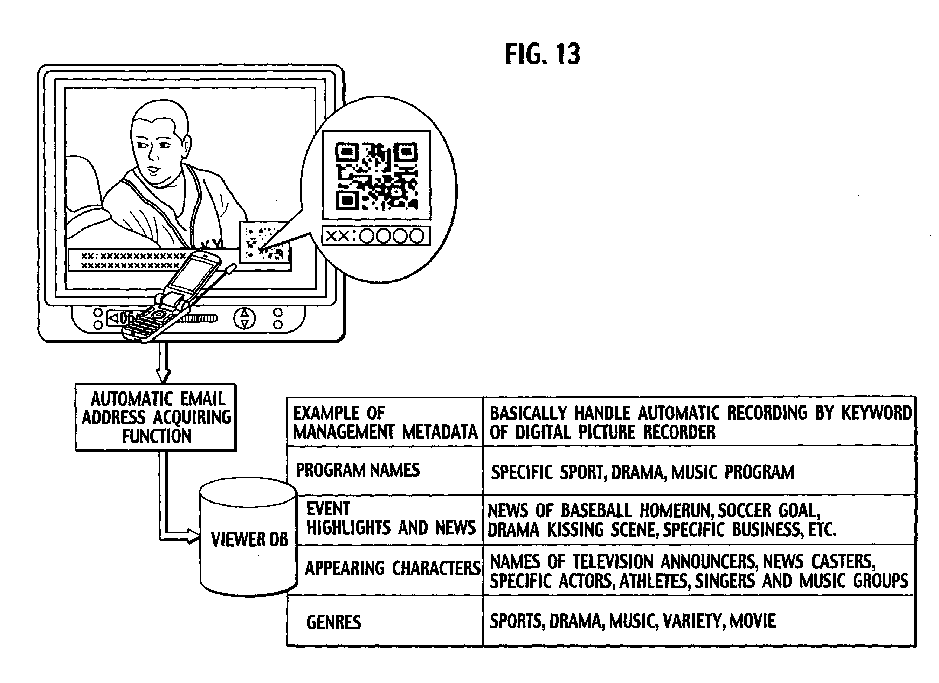

Alternatively, metadata indicating 'program name', 'event highlight/news', 'appearing character', or 'genre' may be embedded in the image code displayed on the screen of a television receiver. Here, 'program name' is a television broadcasting program name of a specified sports program, drama, music program or the like currently being broadcast on television. 'Event highlight/news' is a baseball homerun scene, a soccer goal scene, a drama kissing scene, a news scene of a specified business, or the like currently being displayed on the screen of a television receiver. 'Appearing character' is a specific television announcer's name, a specific news caster's name, a specific actor's name, a specific athlete's name, a specific singer's name, a specific group name, or the like currently being displayed on the screen of a television receiver. 'Genre' is name of a genre of television broadcasting such as sports, drama, music, variety, movie, or the like currently being displayed on the screen of a television receiver. These kinds of metadata may be automatically created using a digital broadcasting keyword, for example. For example, if an image code is read from a screen of a television receiver broadcasting a homerun scene of a specific baseball player shown in FIG. 13, metadata of personal interests and tastes of a user who performed the read, for example likes baseball and is interested in homeruns, is automatically acquired, and automatically registered in a user-side personal information database.

In this case, if inductive emails to a baseball game broadcast are distributed in real time, targets may be induced to view a specific television program and identified using metadata, which allows marketing such as researching a market segment thereof. In other words, automatic registration of metadata of personal interests and tastes as user-side personal information allows distribution of notices for programs the user likes, which may induce users to continue to view specific on-air programs, contributing to increase in advertising revenue and increase in audience rating. Furthermore, automatic registration of metadata of personal interests and tastes as user-side personal information allows reservation and purchase of goods, induction to real events, announcement of product placement, and the like, resulting in increase in advertising revenue.

Moreover, in the electronic commerce system, combination of metadata constituting the user-side personal information may be used for authentication (individual authentication) of each of the portable information processing devices 65a, 65b, .... In other words, in identification of specific portable information processing devices 65a, 65b, ..., individual authentication may be conducted using a combination of a typical set of a personal ID and a password, and demographic data such as address and date of birth, and psychographic data such as a favorite soccer player, interests and tastes. As such, use of a system applying a combination of metadata constituting the user-side personal information to personal authorization allows metadata authorization across multiple business servers constituting an open platform. Particularly, with the electronic commerce system according to the third embodiment, since sessions are managed by issuing a one-time password each time, metadata cannot be identified to be of the same person and thus cannot be created into a bind, session IDs are kept strictly confidential, and there is no fear of leakage of personal information.

In the descriptions of the first through the third embodiment, the example of directly transmitting data between the first portable information processing device 65a and the business server 64a, or the first portable information processing device 65a and the ASP providing server 65 without going through the license registration check server 28 before the license registration check server 28 authenticates the business server 64a or the ASP providing server 65 is given; however, data may of course be directly transmitted between the first portable information processing device 65a and the business server 64a, or the first portable information processing device 65a and the ASP providing server 65 without going through the license registration check server 2 after authentication of the business server 64a or the ASP providing server 65.

Furthermore, in the descriptions of the first through the third embodiments, mobile-phone units are used as image code-reading portable terminals; however, the image code-reading portable terminals are not limited thereto. Other than the mobile-phone units, PHSs, PDAs, notebook-sized personal computers, electronic organizers and the like including an image reading function are available. Alternatively, they may be electronic devices such as cameras including digital cameras, game consoles, car navigation systems, scanners, and printers. Furthermore, a structure built in or integrated to part of items that are attachable to the body such as wristwatches, eyeglasses, belts, and shoes is possible.

Further in the descriptions of the first through the third embodiment, product providers representing product posting URLs, product information, and the like using image codes is described; however, the image codes are not limited to two-dimensional codes. One-dimensional bar codes, 1.5-dimensional bar codes, three-dimensional codes, holograms, digital watermarks, ciphers, and character data are also available.

Yet even further in the first through the third embodiment, 'electronic commerce is conducted' is written; however, electronic commerce does not actually have to be conducted. 'Electronic commerce' should be interpreted in a broad sense including application to submission for a lottery or a quiz, marketing for an advertisement medium, and the like in addition to the various actions given in Table 1 and Table 2.

As such, the present invention naturally includes various embodiments not described herein. Accordingly, the technical scope of the present invention is determined only by specified features of the invention according to the following claims that can be regarded appropriate from the above-mentioned descriptions.

### INDUSTRIAL APPLICABILITY

The electronic commerce method of the present invention and the license registration check server used in this electronic commerce method are applicable to information-processing industries and computer-related industries using various communications networks relevant to electronic commerce methods, business transaction promotional methods, credit card shopping methods, shipping address specifying methods, business transaction payment consignation methods, and business transaction canceling methods.

For example, they are applicable in an information-processing industry where a program recording reservation for recording on a medium in a personal video (video that has an IP address connected to the Internet and is capable of recording) from arbitrary places or various media (television program guides, newspapers, posters on the street, etc.) is made using the portable information processing devices 65a, 65b, .... More specifically, a network address used for program recording reservation with channel name (including all of terrestrial, satellite, and digital television broadcasters), program name, ID, start time, and finish time via the portable information processing devices 65a, 65b, ... should be entered as image information in a program section of a magazine. Furthermore, the IP address of the personal video may be stored in the portable information processing devices 65a, 65b, ..., or the IP address of the personal video may be specified by the portable information processing devices 65a, 65b, ... based on a personal ID and then acquired. They are also applicable in an information-processing industry where a video server is accessed via the portable information processing devices 65a, 65b, ..., and recording information is constituted based on start and finish times of a specified program and a channel and then distributed to the personal video via a network.

Furthermore, they are applicable in an information-processing industry where a real-time, on-site scene may be viewed by specifying a location from a pamphlet map using the portable information processing devices 65a, 65b, ... and the license registration check server 28. For example, the portable information processing devices 65a, 65b, ... may be used for situation confirmation of a site such as state of congestion in town or on a road, a line at a bus stop or concert hall entrance, and the like. More specifically, crowded state at any given attraction may be confirmed from a pamphlet distributed at an entrance of a theme park using the portable information processing devices 65a, 65b, ... and the license registration check server 28. In addition, when selecting a road from a roadmap, crowded states at key locations (junction, bottleneck, and the like of roads) may be visually confirmed using the portable information processing devices 65a, 65b, ... and the license registration check server 28.

Alternatively, they are applicable in an information-processing industry where contents directly downloadable via a communications network are downloaded to a digital television, a game console, a personal computer, a music player (MP3), and the like from various media such as magazine advertisements using the portable information processing devices 65a, 65b, .... In this case, downloading instructions should be written with the ID or Net address (URL) of the contents of new information on a magazine page. If personal information in the main body is simultaneously transferred when accessing an electronic commerce providing server for downloading a specific file, billing may also be conducted at the same time. In other words, the electronic commerce providing server may conduct billing based on the personal information transmitted from the portable information processing devices 65a, 65b, ... at the same time as downloading the specified contents file to a user's Internet terminal.

Further alternatively, they are applicable in an information-processing industry where a webpage on a communications network is updated and uploaded from the portable information processing devices 65a, 65b, ... just by performing conventional recording operations (photographing, audio recording) using an upload camera capable of photographing and recording digital photographs, converting them to digital information, automatically converting an image thereof to an HTML file, and connecting to the communications network,. Digital photographs may also be read in via an image code reader. Image information including the address of a Web page providing information corresponding to a location on a map or a menu sheet, where the map and the menu sheet are interfaces, are attached thereto. Information to be updated is then photographed by the uploading camera having the aforementioned functions. Just by a retail shop owner or the like photographing today's featured product, today's lunch special, live conditions of a concert, and the like in real time, a corresponding Web page is uploaded. Furthermore, if image information of an updating Web page is read in by an image code reader, a corresponding Web page is uploaded just by reading in the image information. For example, in the case of a Web page informing conditions of a town, if Web page updating image information of photographs taken by a passerby and attached on the spot is read in by an image code reader, information on the Web page may be updated on the spot. In other words, regional information and the like is indicated by icons at corresponding locations on a map in a magazine, and registration, update, upload of the information and download of old information are possible in the same magazine. Retail shop owners, employees, customers, passers-by and the like who are busy and familiar with how to use information equipment are capable of communicating information (particularly, transmission of information, rewriting a Web page, and the like) without practice.

Yet even further alternatively, they are applicable in an information-processing industry where a database is compiled by converting products, service information, prices, and advertisement posting media to image information without imposing a burden on a computer system constituting a wide-range distribution communications network. In other words, converting a segment in a database to image information and then printing it on a printed matter such as a magazine broadly including advertisements and promotions allows broad distribution of the database. In this case, combining (corresponding to operations to join databases) various kinds of client information (name, personal ID, shipping address) stored in the portable information processing devices 65a, 65b, ... and data of printed image information may be performed on paper. Completed image information is then transferred to a specified address on the communications network 26. As such, since database records completed on paper are directly transferred, transactions (communication of information) of the electronic commerce providing server are radically reduced, and cost of constructing the information system and cost of management operations are radically reduced. In addition, since each business may determine format and content of data of the image information on its own, standardization of the format and content of data is unnecessary.

Yet even further alternatively, they are applicable in an information-processing industry where various registration services are easily (automatically) conducted in conformity with instructions of action information embedded in an image code as long as a 'set of data (crude information) and action information (operations for registration, access, and the like)' of mobile phone numbers, website URLs, email addresses, and store, personal, and location positional information (latitude and longitude) is embedded in image information as metadata. Furthermore, by preparing action information for registration and action information for execution simultaneously, various actions may be implemented. For example, once image information is read, operations for execution, such as making a phone call in conformity with an instruction of embedded action information, registering that telephone number in the main body, accessing a website designated for reading the image information, and registering the URL thereof in the bookmark of the main body, are also possible When the positional information (latitude and longitude) is read from the image information and registered, corresponding map information, navigation information to that location, and the like may be acquired from a map electronic commerce providing server or the like. In conjunction with a car navigation system, setting a destination in no time at all is also possible.

Even further alternatively, they are applicable in an information-processing industry where a program or data itself such as a structured table, a selection menu, or a matrix is converted to image information and read in using an image code reader, and is thereby executed or displayed in conformity with an instruction of the embedded action information. Since the selection menu may be displayed without communications network access, burden on the electronic commerce providing server is radically reduced. Furthermore, editing and constructing a catalog page may also be extremely simplified. More specifically, when a program such as HTML, JAVA, CGI, an Internet browser method, or XML is directly converted to image information (two-dimensional code), printed, and read in by an image code reader, a mechanism of displaying and executing on a main unit screen may be implemented. For example, when there are options such as various sizes (S, M, L) and colors (red, orange, blue, black) of a single item in a mail-order catalog, a 3 x 4 table of sizes and colors is written in a program as described in a typical website HTML or the like and converted to image information. When product image information in the catalog is read, the table for selecting size and color is directly displayed on the screen without access to the communications network, a user selects desired color and size on the spot, and ordering data is transmitted to an address on the communications network specified in the image information. In this case, since the selection menu is embedded in the image information, transaction via the communications network at the time of selection does not occur. Thus, the business does not need to prepare a website for product selection for each product. There is an advantage of the user not needing to wait for responses from the communications network for information inputting transaction. Furthermore, the business may receive full benefit of a merit of drastic reduction of burden on the electronic commerce providing server. Meanwhile, the user may receive remarkable reduction in communication expense burden and response waiting time due to burden on the electronic commerce providing server. Since such a mechanism can execute instantly by one action troublesome setting of Internet connection, operation accompanying input such as user registration, and emergency access and execution (e.g., turn over of a specific brand stock, bid in an auction, reservation of a popular ticket, or the like) using the portable information processing devices 65a, 65b, ... and the license registration check server 28, it is extremely effective.

## Claims

1. An electronic commerce method for an electronic commerce system comprising a portable information processing device, a business server conducting electronic commerce through communication of electronic information with the portable information processing device, and a license registration check server having authority to control the electronic commerce, the portable information processing device, the business server and the license registration check server are connected to each other via a communications network, the electronic commerce method comprising:
after optically reading, by the portable information processing device, an image code incorporating necessary information for the electronic commerce so as to edit first level personal information stored in the portable information processing device with information incorporated in the image code so as to directly access the business server based on the edited information and to communicate information between the portable information processing device and the business server, receiving, by the license registration check server, second level personal information of a higher security level than the first level personal information stored in the portable information processing device and network information of an access destination of the business server;
determining, by the license registration check server, whether the portable information processing device is owned by a registered user, after consulting data stored in an individual authorization data storage unit;
determining, by a license registration checking means of the license registration check server, whether the business server has a registered license, after consulting data stored in a license registration data storage unit; and
authorizing, by the license registration check server, processing for the portable information processing device to transmit the second level personal information to the business server when the portable information processing device is determined to be owned by the registered user and the business server has the registered license.

2. The electronic commerce method of Claim 1, wherein supply-side public information and action information, which are metadata incorporated in the image code, are cryptographically encoded.

3. An electronic commerce method for an electronic commerce system comprising a portable information processing device, an ASP providing server providing application services to the portable information processing device, and a license registration check server having authority to control electronic commerce, the portable information processing device, the ASP providing server and the license registration check server are connected to each other via a communications network, the electronic commerce method comprising:
after optically reading, by the portable information processing device, an image code incorporating necessary information for the electronic commerce with a business represented by the ASP providing server so as to edit first level personal information stored in the portable information processing device with information incorporated in the image code so as to directly access the ASP providing server based on the edited information and to communicate information between the portable information processing device and the ASP providing server, receiving, by the license registration check server, second level personal information of a higher security level than the first level personal information stored in the portable information processing device and network information of an access destination of the ASP providing server;
determining, by the license registration check server, whether the portable information processing device is owned by a registered user, by consulting data stored in an individual authorization data storage unit;
determining, by a license registration checking means of the license registration check server, whether the ASP providing server has a registered license, after consulting data stored in a license registration data storage unit; and
authorizing, by the license registration check server, processing for the portable information processing device to transmit the second level personal information to the ASP providing server when the portable information processing device is determined to be owned by the registered user and the ASP providing server has the registered license.

4. The electronic commerce method of Claim 3, wherein supply-side public information and action information incorporated in the image code are cryptographically encoded.

5. An electronic commerce method for an electronic commerce system comprising a portable information processing device, a business server conducting electronic commerce through communication of electronic information with the portable information processing device, and a license registration check server having authority to control the electronic commerce, the portable information processing device, the business server and the license registration check server are connected to each other via a communications network, the electronic commerce method comprising:
after optically reading, by the portable information processing device, an image code incorporating necessary information for the electronic commerce so as to edit first level personal information stored in the portable information processing device with information incorporated in the image code so as to directly accessing the business servers based on the edited information, receiving, by the business server, a reservation ticket issue request transmitted by the license registration check server;
determining, by a license registration checking means of the license registration check server, whether the business server has a registered license, after consulting data stored in a license registration data storage unit;
issuing a reservation ticket to the business server when the business server has the registered license;
after communicating information using the portable information processing device, the business server, and a link including a parameter for the reservation ticket, receiving, by the license registration check server, second level personal information of a higher security level than the first level personal information stored in the portable information processing device, network information of an access destination of the business server, and information of the reservation ticket;
confirming validity of the reservation ticket by a reservation ticket registration checking means of the license registration check server after consulting data stored in a reservation ticket registration data storage unit;
determining, by the license registration check server, whether the portable information processing device is owned by a registered user, after consulting data stored in an individual authorization data storage unit; and
authorizing, by the license registration check server, processing for the portable information processing device to transmit the second level personal information to the business server when the reservation ticket is valid and the portable information processing device is determined to be a registered user.

6. The electronic commerce method of Claim 5, wherein supply-side public information and action information incorporated in the image code are cryptographically encoded.

7. A license registration check server used in an electronic commerce system comprising a portable information processing device, a business server conducting electronic commerce through communication of electronic information with the portable information processing device, and a license registration check server having authority to control the electronic commerce, the portable information processing device, the business server and the license registration check server are connected to each other via a communications network, the license registration check server comprising:
an input unit of the license registration check server configured to receive second level personal information of a higher security level than first level personal information stored in the portable information processing device and network information of an access destination of the business server, after the portable information processing device optically reads an image code incorporating necessary information for the electronic commerce so as to edit the first level personal information stored in the portable information processing device and information incorporated in the image code so as to directly access the business server based on the edited information, and to communicate information between the portable information processing device and the business server;
an individual authorization data storage unit configured to store individual authorization data;
an individual authentication means configured to consult data stored in the individual authorization data storage unit so as to determine whether the portable information processing device is owned by a registered user;
a license registration data storage unit configured to store license registration data;
a license registration checking means configured to consult data stored in the license registration data storage unit so as to determine whether the business server has a registered license; and
a personal data extracting means configured to convert the second level personal information to a format transmittable by the portable information processing device to the business server so as to transmit the second level personal information to the portable information processing device when the portable information processing device is determined to be owned by the registered user and the business server has the registered license.
